# EUROPEAN PATENT APPLICATION

(11) **EP 4 770 236 A1**
(43) Date of publication of application: **01.07.2026**
(21) Application number: 23949427.1
(22) Date of filing: 23.08.2023
(51) Int. Cl.: H04W 72/11

(54) **MAPPING METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN)
(74) Representative: Gunzelmann, Rainer
(86) International application number: PCT/CN2023/114541
(87) International publication number: WO 2025/039240

(57) **Abstract**

Provided in the present disclosure are a mapping method and apparatus, and a device and a storage medium. The method includes: a first device determining at least one physical uplink shared channel resource unit (PRU) corresponding to one or more physical uplink shared channel occasions (POs) within one configured grant (CG) period; and the first device determining a mapping relationship between at least one synchronization signal block (SSB) corresponding to the CG period and at least one PRU within the CG period. The method of the present disclosure can successfully implement SSB-to-PRU mapping corresponding to a long CG period, so that the first device can subsequently implement indication for an optimal beam on the basis of the mapping relationship, and can subsequently use the indicated optimal beam to transmit data, thereby improving communication quality.

## Description

### TECHNICAL FIELD

The disclosure relates to the field of communication technology, specifically to a mapping method and an apparatus, a communication device, a communication system, and a storage medium.

### BACKGROUND

In a communication system, a terminal generally performs a small data transmission (SDT) during an initial access procedure to improve data transmission efficiency. Specifically, the terminal generally performs the SDT based on a semi-static configuration. In some embodiments, the SDT procedure based on the semi-static configuration is as follows: when the terminal switches from a radio resource control (RRC) connected state to an RRC inactive state, a network device configures a configured grant (CG) period for the terminal via an RRC release message, and the CG period includes a physical uplink shared channel (PUSCH) resource corresponding to the SDT transmission. In some embodiments, the PUSCH resource may have a mapping relationship (also referred to as an association relationship) with a synchronization signal block (SSB), indicating a downlink beam corresponding to the SSB. In some embodiments, when the terminal transmits the SDT by using the PUSCH resource, the terminal may transmit the SDT by using the PUSCH resource mapped to an SSB corresponding to a downlink beam with the best beam quality, so as to implicitly indicate an optimal downlink beam to the network device.

### SUMMARY

Embodiments of the disclosure provide a mapping method and an apparatus, a communication device, a communication system, and a storage medium.

According to a first aspect of the embodiments of the disclosure, a mapping method is provided, including
determining, by a first device, one or more physical uplink shared channel (PUSCH) resource units (PRUs) corresponding to one or more PUSCH occasions (POs) within one configured grant (CG) period; and
determining, by the first device, a mapping relationship between one or more synchronization signal blocks (SSBs) corresponding to the one CG period and the one or more PRUs within the one CG period.

According to a second aspect of the embodiments of the disclosure, a mapping method is provided, applied in a communication system including a network device and a terminal. The mapping method includes at least one of:
a network device determining one or more PRUs corresponding to one or more POs within one CG period;
a network device determining a mapping relationship between one or more SSBs corresponding to the one CG period and the one or more PRUs within the one CG period;
a terminal determining one or more PRUs corresponding to one or more POs within one CG period; or
a terminal determining a mapping relationship between one or more SSBs corresponding to the one CG period and the one or more PRUs within the one CG period.

According to a third aspect of the embodiments of the disclosure, a first device is provided, including:
a processing module configured to determine one or more PRUs corresponding to one or more POs within one CG period; and
the processing module is further configured to determine a mapping relationship between one or more SSBs corresponding to the one CG period and the one or more PRUs within the one CG period.

According to a fourth aspect of the embodiments of the disclosure, a communication device is provided, including:
one or more processors;
wherein the one or more processors are configured to invoke instructions to cause the communication device to perform the mapping method of the first aspect.

According to a fifth aspect of the embodiments of the disclosure, a communication system is provided, including a terminal and a network device, wherein the terminal or the network device is configured to implement the mapping method of the first aspect.

According to a sixth aspect of the embodiments of the disclosure, a storage medium is provided, and the storage medium stores instructions, which, when run on a communication device, cause the communication device to perform the mapping method of the first aspect.

### BRIEF DESCRIPTION OF THE DRAWINGS

The above and/or additional aspects and advantages of the present disclosure will become apparent and readily understandable from the following description of the embodiments with reference to the accompanying drawings.
FIG. 1 is a schematic diagram of some communication systems according to embodiments of the present disclosure.
FIG. 2A is an interactive schematic diagram of a mapping method according to an embodiment of the present disclosure.
FIG. 2B is a schematic diagram of repetitive transmissions between different PO performing sequentially according to an embodiment of the present disclosure.
FIG. 2C is a schematic diagram of repetitive transmissions between different PO performing alternately according to an embodiment of the present disclosure.
FIG. 3A is a flowchart of a mapping method according to an embodiment of the present disclosure.
FIG. 4A is a flowchart of a mapping method according to another embodiment of the present disclosure.
FIG. 5A is a flowchart of a mapping method according to another embodiment of the present disclosure.
FIG. 5B is a flowchart of a mapping method according to another embodiment of the present disclosure.
FIG. 5C and Fig. 5D are schematic diagrams of a resource mapping pattern according to an embodiment of the present disclosure.
FIG. 6 is a schematic diagram of a terminal according to an embodiment of the present disclosure.
FIG. 7A is a schematic diagram of a communication device according to an embodiment of the present disclosure.
FIG. 7B is a schematic diagram of a chip according to an embodiment of the present disclosure.

### DETAILED DESCRIPTION

Embodiments of the disclosure provide a mapping method and an apparatus, a communication device, a communication system, and a storage medium.

According to a first aspect of the embodiments of the disclosure, a mapping method is provided, which is performed by a first device. The method includes:
determining, by a first device, one or more physical uplink shared channel (PUSCH) resource units (PRUs) corresponding to one or more PUSCH occasions (POs) within one configured grant (CG) period; and
determining, by the first device, a mapping relationship between one or more synchronization signal blocks (SSBs) corresponding to the one CG period and the one or more PRUs within the one CG period.

In the above embodiments, when determining the mapping relationship between the one or more SSBs and the one or more PRUs, a mapping is performed on a granularity of "one CG period", where all SSB indices for all SSBs corresponding to the one CG period are mapped to the one or more PRUs within the one CG period. A concept of an "association period" in the related art is absent, where the association period is a concept introduced in the related art to ensure that all SSBs corresponding to a CG period may be mapped to a PRU(s), and the association period may include at least one CG period. The association period satisfies the following condition: a count of PRUs within the association period is sufficient to enable all SSBs corresponding to the one CG period to be mapped to PRUs within the association period. However, as proposed in RAN2, the CG period needs to be extended, for example, to tens of minutes to several hours, while the association period may reach a maximum of only 640 milliseconds (ms). Thus, when the CG period is extended to tens of minutes to several hours, the association period, due to its short duration, may not even include a PO within the CG period given a long duration of the CG period, thereby resulting in no PRUs enabled to be mapped to an SSB being included in the association period. Based on this, in embodiments of the present disclosure, when mapping, on the granularity of "one CG period", all SSBs corresponding to the one CG period to the one or more PRUs within the one CG period, since at least one PRU is always corresponding to the one CG period, successful implementation of "mapping from the one or more SSBs corresponding to the one CG period to the one or more PRUs within the one CG period" may be ensured even when the CG period is extended to tens of minutes to several hours. This may avoid a scenario in the related art where, when mapping, on the granularity of "one association period", all SSBs corresponding to the one CG period to the one or more PRUs within the association period, as the one CG period is extended but the association period may reach the maximum of only 640 ms, the determined association period may not includ any PO when determining the association period within the one CG period, thereby resulting in no PRUs enabled to be mapped to the SSB being included in the association period and making it impossible to implement the mapping of the SSB to the PRU(s) within the association period. It may be seen that the method of the present disclosure may successfully implement the mapping of SSB(s) to PRU(s) corresponding to a long CG period, so that the first device may subsequently implement an indication of an optimal beam based on the mapping relationship. For example, the first device may transmit data via a PRU mapped to an SSB corresponding to the optimal beam, so as to implicitly indicate the optimal beam, and may subsequently transmit data using the indicated optimal beam to improve a communication quality.

In combination with some embodiments of the first aspect, in some embodiments, determining the one or more PRUs corresponding to the one or more POs within the one CG period comprises:
determining a first configuration, wherein the first configuration is used to configure at least one of: a count of POs within the one CG period, or a demodulation reference signal (DMRS) configuration corresponding to a PO, wherein the DMRS configuration comprises at least one of: a DMRS mapping type, a DMRS port or a DMRS scrambling identifier (ID), and different DMRS scrambling IDs are used to generate different DMRS sequences; and
determining the one or more PRUs corresponding to the one or more POs within the one CG period based on the first configuration, and numbering the one or more PRUs sequentially, wherein a resource occupied by the DMRS port corresponding to a DMRS sequence on the PO corresponds to one PRU respectively.

In combination with some embodiments of the first aspect, in some embodiments, the DMRS mapping type comprises DMRS type 1 and/or DMRS type 2; and
the first configuration is capable of configuring N DMRS scrambling IDs, where N is a positive integer and N≤4.

In the above embodiments, a method for the first device to determine the one or more PRUs corresponding to the one or more POs within the one CG period is provided, which enables the first device to successfully determine the one or more PRUs corresponding to the one CG period, so as to subsequently implement the mapping from the one or more SSBs corresponding to the one CG period to the one or more PRUs, and facilitate the first device to indicate the optimal beam based on the mapping relationship subsequently. Furthermore, in the above embodiments, the first configuration may configure the one CG period to include a plurality of POs, or the first configuration may configure up to 4 DMRS scrambling IDs, so that a count of PRUs corresponding to the one CG period may be maximized. Thus, even if a relatively large count of SSBs are configured for the one CG period, each SSB may still be ensured to be mapped to the PRU(s), enabling the one CG period to support a configuration of a relatively large count of SSBs. In this case, when the first device is a terminal, the terminal may select an SSB index corresponding to the optimal downlink beam from beams associated with the relatively large count of SSBs and indicate the SSB index to a network device. The network device side may identify the SSB index indicated by the terminal, further determine the optimal downlink beam, and improve the communication quality.

In combination with some embodiments of the first aspect, in some embodiments, numbering the one or more PRUs sequentially comprises:
numbering the one or more PRUs sequentially in a first manner, wherein the one CG period comprises one PO; and
numbering the one or more PRUs sequentially in a second manner, wherein the one CG period comprises a plurality of POs.

In combination with some embodiments of the first aspect, in some embodiments, the first manner comprises:
numbering one or more PRUs respectively corresponding to one or more DMRS ports corresponding to a first DMRS sequence sequentially, and numbering one or more PRUs respectively corresponding to one or more DMRS ports of a second DMRS sequence sequentially, until PRUs respectively corresponding to DMRS ports corresponding to all DMRS sequences are numbered.

In combination with some embodiments of the first aspect, in some embodiments, PO time domain positions and/or PO frequency domain positions of the plurality of POs within the one CG period are different, wherein a PO time domain position refers to a time domain position where the PO is located, and a PO frequency domain position refers to a frequency domain position where the PO is located.

In combination with some embodiments of the first aspect, in some embodiments, the second manner comprises:
numbering PRUs respectively corresponding to DMRS ports corresponding to all DMRS sequences of POs at all PO frequency domain positions on a first PO time domain position within the one CG period sequentially in a predetermined manner, and numbering PRUs respectively corresponding to DMRS ports corresponding to all DMRS sequences of POs at all PO frequency domain positions on a second PO time domain position within the one CG period sequentially in the predetermined manner, until PRUs respectively corresponding to DMRS ports corresponding to all DMRS sequences of POs at all PO frequency domain positions on all PO time domain positions within the one CG period are numbered.

In combination with some embodiments of the first aspect, in some embodiments, the predetermined manner comprises:
numbering one or more PRUs respectively corresponding to one or more DMRS ports corresponding to a first DMRS sequence of a PO at a first PO frequency domain position on a PO time domain position sequentially, and numbering one or more PRUs respectively corresponding to one or more DMRS ports corresponding to a second DMRS sequence of the PO at the first PO frequency domain position on the PO time domain position sequentially, so as to determine sequence numbers of PRUs respectively corresponding to DMRS ports corresponding to all DMRS sequences of the PO at the first PO frequency domain position on the PO time domain position; numbering one or more PRUs respectively corresponding to one or more DMRS ports corresponding to a first DMRS sequence of a PO at a second PO frequency domain position on the PO time domain position sequentially, and numbering one or more PRUs respectively corresponding to one or more DMRS ports corresponding to a second DMRS sequence of the PO at the second PO frequency domain position on the PO time domain position sequentially, so as to determine sequence numbers of PRUs respectively corresponding to DMRS ports corresponding to all DMRS sequences of the PO at the second PO frequency domain position on the PO time domain position, until PRUs respectively corresponding to DMRS ports corresponding to all DMRS sequences of POs at all PO frequency domain positions on the PO time domain position are numbered.

In the above embodiments, a method for the first device to number the one or more PRUs corresponding to the one CG period is provided, which is used to successfully number the one or more PRUs, so that the mapping of SSB(s) to PRU(s) may be sequentially implemented in an order of the one or more numbered PRUs subsequently, thereby ensuring a convenience of the mapping of SSB(s) to PRU(s).

In combination with some embodiments of the first aspect, in some embodiments, determining the mapping relationship between the one or more SSBs corresponding to the one CG period and the one or more PRUs within the one CG period comprises:
determining a second configuration, wherein the second configuration is used to configure at least one of: the one or more SSBs corresponding to the one CG period, or a mapping ratio between the one or more SSBs and the one or more PRUs; and
determining, based on the second configuration and sequence numbers of the one or more PRUs, the mapping relationship between the one or more SSBs corresponding to the one CG period and the one or more PRUs within the one CG period.

In the above embodiments, a method for the first device to determine the mapping relationship between the one or more SSBs corresponding to the one CG period and the one or more PRUs within the one CG period is provided, which is used to successfully implement the mapping from the one or more SSBs corresponding to the one CG period to the one or more PRUs within the one CG period, so that the first device may subsequently indicate the optimal beam based on the mapping relationship, thereby ensuring the communication quality.

In combination with some embodiments of the first aspect, in some embodiments, determining the mapping relationship between the one or more SSBs corresponding to the one CG period and the one or more PRUs within the one CG period comprises at least one of:
determining the mapping relationship between all SSBs corresponding to the one CG period and PRUs within the one CG period respectively, so as to complete one round of mapping from SSBs to PRUs within the one CG period;
in a case where one or more PRUs unmapped to any SSB remain within the one CG period, and the one or more PRUs unmapped to any SSB are capable of completing another round of mapping from the SSBs to the PRUs, determining the mapping relationship between all the SSBs corresponding to the one CG period and the one or more PRUs unmapped to any SSB within the one CG period respectively, so as to complete another round of mapping from the SSBs to the PRUs within the one CG period; and
in a case where PRUs unmapped to any SSB are absent from the one CG period, and/or one or more PRUs unmapped to any SSB remain within the one CG period but the one or more PRUs unmapped to any SSB are incapable of completing another round of mapping from the SSBs to the PRUs, terminating the mapping.

In combination with some embodiments of the first aspect, in some embodiments, the first configuration and/or the second configuration enable M rounds of mapping to be performed from all SSBs corresponding to the one CG period to PRUs within the one CG period, where M is a positive integer.

In combination with some embodiments of the first aspect, in some embodiments, the first configuration and/or the second configuration enable M rounds of mapping to be performed from all SSBs corresponding to the one CG period to PRUs within the one CG period, where M is a positive integer, and no unmapped PRUs remain.

In the above embodiments, when implementing the mapping from SSB(s) to PRU(s), at least one round of mapping from SSB(s) to PRU(s) is ensured to be completed, so that all SSBs corresponding to the one CG period are each mapped to the PRU(s). This ensures that the first device may perform an implicit indication of beams respectively corresponding to the SSBs via PRUs mapped to the SSBs respectively, and guarantees a flexibility for the first device in implicitly indicating the optimal beam in subsequent operations.

In combination with some embodiments of the first aspect, in some embodiments, the one CG period comprises a plurality of POs, the plurality of POs are configured with repetitive transmissions respectively, and the repetitive transmissions corresponding to the plurality of POs are performed sequentially or alternately.

In the above embodiments, a method is provided for specifically performing the repetitive transmissions between different POs when the repetitive transmissions of POs in the one CG period are required during the implicit indication of the optimal beam, so that when the first device implicitly indicates the optimal beam, the repetitive transmissions of different POs may be ensured to be performed successfully, thereby guaranteeing a communication stability.

In combination with some embodiments of the first aspect, in some embodiments, the first device is a terminal or a network device.

In the above embodiments, the first device may be the terminal or the network device. It may be seen therefrom that the terminal and the network device determine the mapping relationship between the one or more SSBs corresponding to the one CG period and the one or more PRUs within the one CG period by using the same method, which ensures that the terminal and the network device have a consistent understanding of the mapping relationship between SSB(s) and PRU(s). Based on this, the terminal and the network device may each implement the implicit indication of the optimal beam based on their own understanding of the mapping relationship between SSB(s) and PRU(s). For example, the terminal may implicitly indicate the optimal downlink beam to the network device by using the mapping relationship between SSB(s) and PRU(s) understood by the terminal, and the network device may determine the optimal downlink beam implicitly indicated by the terminal based on the mapping relationship between SSB(s) and PRU(s) understood by the network device. Since the terminal and the network device have a consistent understanding of the mapping relationship between SSB(s) and PRU(s), the optimal downlink beam determined by the network device is exactly the optimal downlink beam implicitly indicated by the terminal, thereby ensuring an accuracy and stability of the indication for the optimal downlink beam. Furthermore, since the terminal and the network device have a consistent understanding of the mapping relationship between SSB(s) and PRU(s), there is no need for an additional transmission of the mapping relationship between SSB(s) and PRU(s) between the terminal and the network device, thereby saving resource overhead.

In combination with some embodiments of the first aspect, in some embodiments, the first device is a terminal, and determining the second configuration comprises:
receiving the second configuration sent by a network device via a radio resource control (RRC) release message and/or via a system information block 1 (SIB1) message.

In the above embodiments, a method for the terminal to determine the second configuration when the first device is the terminal is provided, which enables the terminal to successfully determine the second configuration, so that the terminal may subsequently determine the mapping relationship between SSB(s) and PRU(s) successfully based on the second configuration, and implicitly indicate the optimal downlink beam to the network device based on the mapping relationship, thereby ensuring downlink communication quality.

In combination with some embodiments of the first aspect, in some embodiments, the first device is a terminal, and the mapping method further comprises:
determining a target PRU, wherein an SSB mapped to the target PRU is associated with a target downlink beam, and the target PRU indicates the target downlink beam; and
transmitting data to a network device by using the target PRU.

In the above embodiments, a method for the terminal to implicitly indicate the optimal downlink beam to the network device when the first device is the terminal is provided, which enables the terminal to successfully implicitly indicate the optimal downlink beam to the network device, so that the network device may determine the optimal downlink beam and transmit data to the terminal based on the optimal downlink beam, thereby ensuring the downlink communication quality.

In combination with some embodiments of the first aspect, in some embodiments, the one CG period is used for a small data transmission (SDT).

According to a second aspect of the embodiments of the disclosure, a mapping method is provided, applied in a communication system including a network device and a terminal. The mapping method includes at least one of:
a network device determining one or more PRUs corresponding to one or more POs within one CG period;
a network device determining a mapping relationship between one or more SSBs corresponding to the one CG period and the one or more PRUs within the one CG period;
a terminal determining one or more PRUs corresponding to one or more POs within one CG period; or
a terminal determining a mapping relationship between one or more SSBs corresponding to the one CG period and the one or more PRUs within the one CG period.

According to a third aspect of the embodiments of the disclosure, a first device is provided, including:
a processing module configured to determine one or more PRUs corresponding to one or more POs within one CG period; and
the processing module is further configured to determine a mapping relationship between one or more SSBs corresponding to the one CG period and the one or more PRUs within the one CG period.

In combination with some embodiments of the third aspect, in some embodiments, the processing module is configured to:
determine a first configuration, wherein the first configuration is used to configure at least one of: a count of POs within the one CG period, or a DMRS configuration corresponding to a PO, wherein the DMRS configuration comprises at least one of: a DMRS mapping type, a DMRS port or a DMRS scrambling ID, and different DMRS scrambling IDs are used to generate different DMRS sequences; and
determine the one or more PRUs corresponding to the one or more POs within the one CG period based on the first configuration, and number the one or more PRUs sequentially, wherein a resource occupied by the DMRS port corresponding to a DMRS sequence on the PO corresponds to one PRU respectively.

In combination with some embodiments of the third aspect, in some embodiments, the DMRS mapping type comprises DMRS type 1 and/or DMRS type 2; and
the first configuration is capable of configuring N DMRS scrambling IDs, where N is a positive integer and N≤4.

In combination with some embodiments of the third aspect, in some embodiments, the processing module is configured to:
number the one or more PRUs sequentially in a first manner, wherein the one CG period comprises one PO; and
number the one or more PRUs sequentially in a second manner, wherein the one CG period comprises a plurality of POs.

In combination with some embodiments of the third aspect, in some embodiments, the first manner comprises:
numbering one or more PRUs respectively corresponding to one or more DMRS ports corresponding to a first DMRS sequence sequentially, and numbering one or more PRUs respectively corresponding to one or more DMRS ports of a second DMRS sequence sequentially, until PRUs respectively corresponding to DMRS ports corresponding to all DMRS sequences are numbered.

In combination with some embodiments of the third aspect, in some embodiments, PO time domain positions and/or PO frequency domain positions of the plurality of POs within the one CG period are different, wherein a PO time domain position refers to a time domain position where the PO is located, and a PO frequency domain position refers to a frequency domain position where the PO is located.

In combination with some embodiments of the third aspect, in some embodiments, the second manner comprises:
numbering PRUs respectively corresponding to DMRS ports corresponding to all DMRS sequences of POs at all PO frequency domain positions on a first PO time domain position within the one CG period sequentially in a predetermined manner, and numbering PRUs respectively corresponding to DMRS ports corresponding to all DMRS sequences of POs at all PO frequency domain positions on a second PO time domain position within the one CG period sequentially in the predetermined manner, until PRUs respectively corresponding to DMRS ports corresponding to all DMRS sequences of POs at all PO frequency domain positions on all PO time domain positions within the one CG period are numbered.

In combination with some embodiments of the third aspect, in some embodiments, the predetermined manner comprises:
numbering one or more PRUs respectively corresponding to one or more DMRS ports corresponding to a first DMRS sequence of a PO at a first PO frequency domain position on a PO time domain position sequentially, and numbering one or more PRUs respectively corresponding to one or more DMRS ports corresponding to a second DMRS sequence of the PO at the first PO frequency domain position on the PO time domain position sequentially, so as to determine sequence numbers of PRUs respectively corresponding to DMRS ports corresponding to all DMRS sequences of the PO at the first PO frequency domain position on the PO time domain position; numbering one or more PRUs respectively corresponding to one or more DMRS ports corresponding to a first DMRS sequence of a PO at a second PO frequency domain position on the PO time domain position sequentially, and numbering one or more PRUs respectively corresponding to one or more DMRS ports corresponding to a second DMRS sequence of the PO at the second PO frequency domain position on the PO time domain position sequentially, so as to determine sequence numbers of PRUs respectively corresponding to DMRS ports corresponding to all DMRS sequences of the PO at the second PO frequency domain position on the PO time domain position, until PRUs respectively corresponding to DMRS ports corresponding to all DMRS sequences of POs at all PO frequency domain positions on the PO time domain position are numbered.

**In** combination with some embodiments of the third aspect, in some embodiments, the processing module is configured to:
determine a second configuration, wherein the second configuration is used to configure at least one of: the one or more SSBs corresponding to the one CG period, or a mapping ratio between the one or more SSBs and the one or more PRUs; and
determine, based on the second configuration and sequence numbers of the one or more PRUs, the mapping relationship between the one or more SSBs corresponding to the one CG period and the one or more PRUs within the one CG period.

In combination with some embodiments of the third aspect, in some embodiments, the processing module is configured to at least one of:
determine the mapping relationship between all SSBs corresponding to the one CG period and PRUs within the one CG period respectively, so as to complete one round of mapping from SSBs to PRUs within the one CG period;
in a case where one or more PRUs unmapped to any SSB remain within the one CG period, and the one or more PRUs unmapped to any SSB are capable of completing another round of mapping from the SSBs to the PRUs, determine the mapping relationship between all the SSBs corresponding to the one CG period and the one or more PRUs unmapped to any SSB within the one CG period respectively, so as to complete another round of mapping from the SSBs to the PRUs within the one CG period; and
in a case where PRUs unmapped to any SSB are absent from the one CG period, and/or one or more PRUs unmapped to any SSB remain within the one CG period but the one or more PRUs unmapped to any SSB are incapable of completing another round of mapping from the SSBs to the PRUs, terminate the mapping.

In combination with some embodiments of the third aspect, in some embodiments, the first configuration and/or the second configuration enable M rounds of mapping to be performed from all SSBs corresponding to the one CG period to PRUs within the one CG period, where M is a positive integer.

In combination with some embodiments of the third aspect, in some embodiments, the first configuration and/or the second configuration enable M rounds of mapping to be performed from all SSBs corresponding to the one CG period to PRUs within the one CG period, where M is a positive integer, and no unmapped PRUs remain.

In combination with some embodiments of the third aspect, in some embodiments, the one CG period comprises a plurality of POs, the plurality of POs are configured with repetitive transmissions respectively, and the repetitive transmissions corresponding to the plurality of POs are performed sequentially or alternately.

**In** combination with some embodiments of the third aspect, in some embodiments, the first device is a terminal or a network device.

In combination with some embodiments of the third aspect, in some embodiments, the first device is a terminal, and the processing module is further configured to:
receive the second configuration sent by a network device via an RRC release message and/or via an SIB1 message.

In combination with some embodiments of the third aspect, in some embodiments, the first device is a terminal, and the first device further comprises:
determine a target PRU, wherein an SSB mapped to the target PRU is associated with a target downlink beam, and the target PRU indicates the target downlink beam; and
transmit data to a network device by using the target PRU.

In combination with some embodiments of the third aspect, in some embodiments, the one CG period is used for an SDT.

According to a fourth aspect of the embodiments of the present disclosure, a communication device is provided, which comprises: one or more processors; one or more memories for storing instructions, wherein the one or more processors are configured to invoke the instructions to cause the communication device to perform the mapping method as described in the first aspect and implementations of the first aspect.

According to a fifth aspect of the embodiments of the present disclosure, a communication system is provided, which comprises: a terminal and a network device, wherein the terminal and the network device are configured to perform the mapping method as described in the first aspect and implementations of the first aspect.

According to a sixth aspect of the embodiments of the present disclosure, a storage medium storing instructions is provide. When the instructions are run on a communication device, the communication device is caused to perform the mapping method as described in the first aspect and implementations of the first aspect.

According to a seventh aspect of the embodiments of the present disclosure, a program product is provided, which, when executed by a communication device, causes the communication device to perform the mapping method as described in the first aspect and implementations of the first aspect.

According to an eighth aspect of the embodiments of the present disclosure, a computer program is provided, which, when run on a computer, causes the computer to perform the mapping method as described in the first aspect and implementations of the first aspect.

It may be understood that the above terminal, network device, communication device, communication system, storage medium, program product and computer program are all configured to perform the mapping method proposed in the embodiments of the present disclosure. Therefore, the beneficial effects achievable thereby may refer to the beneficial effects in the corresponding method, and are not repeated herein.

Embodiments of the present disclosure propose an invention title. In some embodiments, terms such as mapping method, information processing method, information transmission method and information reception method may be interchanged with each other; terms such as communication apparatus, information processing apparatus, information transmission apparatus and information reception apparatus may be interchanged with each other; and terms such as information processing system, communication system, information transmission system and information reception system may be interchanged with each other.

The embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, implementations in a certain embodiment may be combined arbitrarily; furthermore, the embodiments may be combined arbitrarily. For example, some or all steps of different embodiments may be combined arbitrarily, and a certain embodiment may be combined arbitrarily with implementations of other embodiments.

In each embodiment of the disclosure, unless otherwise specified and without logical conflict, the terms and/or descriptions between the embodiments are consistent and may be cross-referenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, unless otherwise stated, elements expressed in the singular form, such as "a", "an", "the", "said", "aforesaid", and "this", may mean "one and only one", or "one or more", "at least one", etc. For example, when articles such as "a", "an", and "the" in English are used in translation, the noun following the article may be understood as a singular form or a plural form.

In the embodiments of the disclosure, "a plurality of" refers to two or more.

In some embodiments, terms such as "at least one (of)", "one or more", "a plurality of", and "multiple" may be used interchangeably.

In the embodiments of the present disclosure, expressions such as "at least one of A, B, C, ..." and "A and/or B and/or C, ..." encompass the case where any one of A, B, C, ... exists alone, as well as the case of any combination of any plurality of A, B, C, ..., and each case may exist independently. For example, "at least one of A, B, C" includes the cases of A alone, B alone, C alone, a combination of A and B, a combination of A and C, a combination of B and C, and a combination of A, B and C. For example, A and/or B includes the cases of A alone, B alone, and a combination of A and B.

In some embodiments, expressions such as "A in one case, B in another case" and "A in response to one case, B in response to another case" may encompass the following technical solutions depending on cases: A is performed independently of B, i.e., A in some embodiments; B is performed independently of A, i.e., B in some embodiments; A and B are performed selectively, i.e., one of A and B is selected to be performed in some embodiments; both A and B are performed, i.e., A and B in some embodiments. The same applies when there are more branches such as A, B and C.

Prefixes such as "first" and "second" in the embodiments of the disclosure are merely used to distinguish different description objects and do not limit the position, order, priority, quantity, or content of the description objects. For the description of the description objects, refer to the description in the claims or the context of the embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the quantity of the description object is not limited by the ordinal number and may be one or more. Taking "the first apparatus" as an example, the quantity of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "containing A", "used to indicate A", and "carrying A" may be interpreted as directly carrying A or indirectly indicating A.

**In** some embodiments, the terms "in response to...", "in response to determining that...", "in the case that...", "when...", "at the time when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

**In** some embodiments, "apparatus" may be construed as either entity or virtual. Names of the "apparatus" are not limited to those recorded in the embodiments. The terms such as "apparatus", "equipment", "device", "circuit", "network element", "node", "function", "unit", "section", "system", "network", "chip", "chip system", "entity" and "subject" may be used interchangeably.

In some embodiments, the term "network" may be interpreted as an apparatus included in a network (e.g., an access network device, a core network device, etc.).

In some embodiments, the terms "access network device (AN device)", "radio access network device (RAN device)", "base station (BS)", "radio base station", "fixed station", and, in some embodiment, may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be used interchangeably.

In some embodiments, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" may be used interchangeably.

In some embodiments, an access network device, a core network device, or a network device may be replaced with a terminal. For example, the embodiments of the present disclosure may also be applied to a structure in which communication between an access network device, a core network device, or a network device and a terminal is replaced with communication between a plurality of terminals (e.g., which may also be referred to as device-to-device (D2D), vehicle-to-everything (V2X), etc.). In this case, a structure in which a terminal has all or part of the functions of an access network device may also be adopted. Furthermore, terms such as "uplink" and "downlink" may also be replaced with terms corresponding to inter-terminal communication (e.g., "sidelink"). For example, an uplink channel, a downlink channel, etc. may be replaced with a sidelink channel, and an uplink, a downlink, etc. may be replaced with a sidelink.

In some embodiments, a terminal may be replaced with an access network device, a core network device, or a network device. In this case, a structure in which an access network device, a core network device, or a network device has all or part of the functions of a terminal may also be adopted.

In some embodiments, acquiring data, information, etc., may comply with the laws and regulations of the country where it is located.

**In** some embodiments, data, information, etc., may be acquired with the user's consent.

In addition, each element, each row, or each column in the tables of the embodiments of the disclosure may be implemented as an independent embodiment, and any combination of any elements, any rows, or any columns may also be implemented as an independent embodiment.

The correspondence relationships shown in the tables in the present disclosure may be configured or predefined. The values of the information in each table are merely examples and may be configured to other values, which is not limited by the present disclosure. When configuring the correspondence relationships between the information and the parameters, it is not necessarily required to configure all the correspondence relationships illustrated in the tables. For example, the correspondence relationships shown in certain rows of the tables in the present disclosure may also not be configured. As another example, appropriate modifications and adjustments may be made based on the above tables, such as splitting, merging, and the like. The names of the parameters shown in the titles of the above tables may also adopt other names understandable by a communication apparatus, and the values or representation manners of the parameters may also be other values or representation manners understandable by the communication apparatus. When implementing the above tables, other data structures may also be adopted, such as an array, a queue, a container, a stack, a linear list, a pointer, a linked list, a tree, a graph, a structure, a class, a heap, a hash table, and the like.

Predefined in the present disclosure may be understood as defined, pre-defined, stored, pre-stored, pre-negotiated, pre-configured, solidified, or pre-burned.

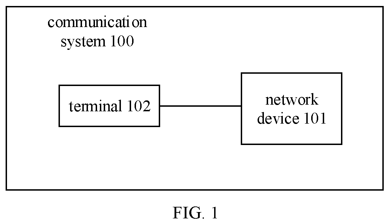

FIG. 1 is a schematic diagram of a communication system according to an embodiment of the disclosure. As shown in FIG. 1, a communication system 100 may include at least one of a terminal 101 or a network device 102. The network device may include at least one of an access network device or a core network device.

In some embodiments, the terminal includes, for example, at least one of a mobile phone, a wearable device, an Internet of Things (IoT) device, a vehicle with communication functions, an intelligent vehicle, a Pad, a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device is, for example, a node or device that connects a terminal to a wireless network. The network device may include at least one of an evolved nodeB (eNB) in a 5G communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, and an access node in a wireless fidelity (Wi-Fi) system, but is not limited thereto.

In some embodiments, the technical solutions of the disclosure may be applicable to the open RAN architecture. In this case, interfaces between access network devices or within the access network device involved in the embodiments of the disclosure may be converted into internal interfaces of the open RAN, and procedures and information interaction between these internal interfaces may be implemented by software or programs.

In some embodiments, the access network device may consist of a central unit (CU) and a distributed unit (DU). The CU may also be referred to as a control unit. The CU-DU architecture enables protocol layers of the access network device to be separated. Functions of some protocol layers are subject to a centralized control of the CU, and functions of the remaining part or all of the protocol layers are distributed in the DU, which is centrally controlled by the CU. However, the disclosure is not limited thereto.

In some embodiments, the core network device may be a single device comprising one or more network elements, or a plurality of devices or device clusters each comprising all or part of one or more network elements. A network element may be virtual or physical. The core network includes, for example, at least one of an evolved packet core (EPC), a 5G core network (5GCN), and a next generation core (NGC). Alternatively, the core network device may also be a location management function network element. For example, the location management function network element includes a location server, and the location server may be implemented as any one of the following: a location management function (LMF), an enhanced serving mobile location centre (E-SMLC), secure user plane location (SUPL), and an SUPL location platform (SUPLLP).

It is understandable that the communication system described in the embodiments of the disclosure is for the purpose of more clearly illustrating the technical solutions of the embodiments of the disclosure, and does not constitute a limitation on the technical solutions proposed in the embodiments of the disclosure. As understood by those of ordinary skill in the art, with the evolution of system architectures and the emergence of new service scenarios, the technical solutions proposed in the embodiments of the disclosure are equally applicable to similar technical problems.

The following embodiments of the disclosure may be applied to the communication system 100 shown in FIG. 1, or some entities in the communication system 100, but are not limited thereto. Each entity shown in FIG. 1 is an example. The communication system may include all or part of the entities in FIG. 1, or may also include other entities not shown in FIG. 1. The number and form of each entity are arbitrary. Connection relationships between entities are exemplary. Each entity may be unconnected or connected with each other, and the connection may be in any manner, either direct connection or indirect connection, wired connection or wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, internet of things (IoT) system, vehicle-to-everything (V2X), systems using other communication methods, next-generation systems extended based on them, etc. In addition, a plurality of systems may be combined (for example, a combination of LTE or LTE-A and 5G, etc.) for application.

In some embodiments, the PUSCH resource for the small data transmission (SDT) transmission in the CG period mentioned in the above background art may be, for example, a PO, where one CG period may include at least one PO, and one PO may correspond to a plurality of PRUs. That is, one PRU may correspond to one PO, or a plurality of PRUs may correspond to one PO. The mapping relationship may exist between SSB(s) and PRU(s), where one SSB may be mapped to a plurality of PRUs; and/or a plurality of SSBs may be mapped to one PRU. For example, H SSBs may be mapped to one PRU, where H may be configured by the network device, and the value of H may be {1/8, 1/4, 1/2, 1, 2, 4, 8, 16}; other values are of course also possible. When H takes a value of 1/8, it means that one SSB is mapped to eight PRUs. In some embodiments, in some embodiments, the network device generally configures at least one SSB for the one CG period. To ensure that all SSBs corresponding to the one CG period may be mapped to PRU(s), the concept of the association period is introduced, which may be referred to as an association period, an SSB-to-PRU association period, an association pattern period, or the like. The association period may include at least one CG period, and satisfies the following condition: the count of PRUs within the association period is sufficient to enable all SSBs corresponding to the one CG period to be mapped to PRU(s), or in other words, PRUs within the association period may complete at least one round of mapping from all SSBs corresponding to the one CG period to PRU(s). In some embodiments, after one round of mapping, if there are remaining PRU resources, mapping may continue for a next round until the remaining PRUs are insufficient to complete one round of mapping, and the remaining PRUs are regarded as unavailable resources. Thus, by introducing the concept of the association period, all SSBs corresponding to the one CG period are each mapped to PRU(s), so that the implicit indication of a beam corresponding to any SSB may be implemented based on the PRU(s) mapped to any SSB corresponding to the one CG period.

Currently, RAN2 proposes in R18 TEI to extend the CG period, for example, to tens of minutes to several hours. However, since the association period may reach a maximum of only 640 ms, when the CG period is extended to tens of minutes to several hours, the association period, due to its short duration, may not even include the PO within the CG period given the long duration of the CG period, thereby resulting in no PRUs enabled to be mapped to the SSB being included in the association period. In this case, a design requirement that "at least one round of mapping from all SSBs to PRU(s) is completed within one association period" cannot be satisfied. Therefore, it is necessary to consider redesigning an SSB-to-PRU mapping relationship.

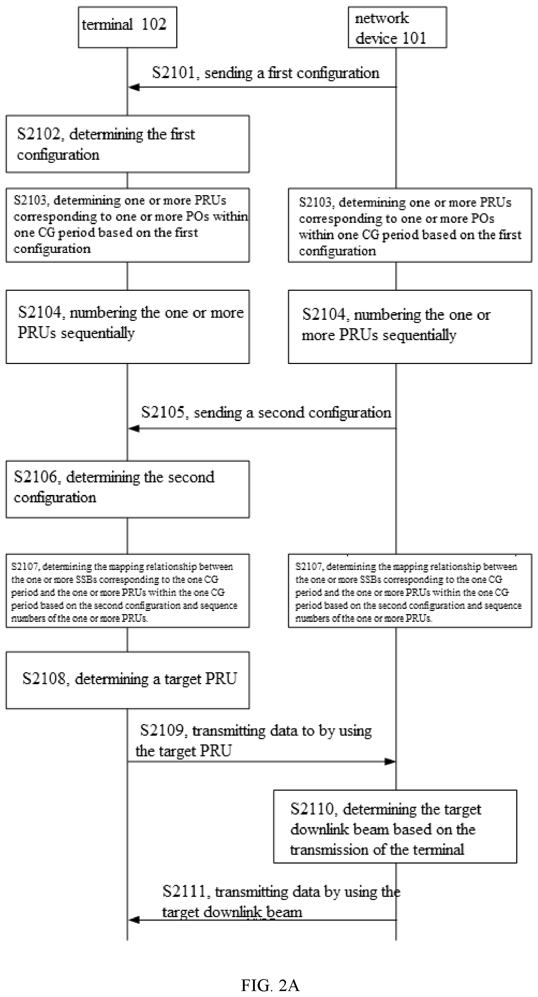

FIG. 2A is an interactive schematic diagram of a mapping method according to an embodiment of the present disclosure. As shown in FIG. 2A, the embodiments of the present disclosure relate to the mapping method applied to the communication system 100, and the mapping method includes the following steps.

At step 2101, a network device transmits a first configuration.

**In** some embodiments, the first configuration may be used to configure at least one of: a count of POs within one CG period, and a DMRS configuration corresponding to a PO.

Correspondingly, a terminal may perform a corresponding configuration according to the received first configuration.

In some embodiments, the aforementioned PO may be understood as a PUSCH resource occupied by the terminal for performing an SDT, and the one CG period may include one or more POs.

In some embodiments, the one or more POs correspond to DMRS configurations respectively, where the DMRS configuration corresponding to the PO may be used to configure a DMRS. The DMRS may be transmitted simultaneously with the SDT, and the DMRS may be used for channel estimation and detection of the PUSCH carrying the SDT. In some embodiments, the DMRS configuration may include at least one of: a DMRS mapping type, a DMRS port, or a DMRS scrambling ID. The DMRS mapping type includes DMRS mapping type 1 and DMRS mapping type 2. DMRS mapping type 1 may be configured with a maximum of 8 DMRS ports, where single-symbol DMRS mapping type 1 may be configured with 4 DMRS ports, and double-symbol DMRS mapping type 1 may be configured with 8 DMRS ports. DMRS mapping type 2 may be configured with a maximum of 12 DMRS ports, where single-symbol DMRS mapping type 2 may be configured with 6 DMRS ports, and double-symbol DMRS mapping type 2 may be configured with 12 DMRS ports. Each DMRS port corresponds to the PUSCH resource, and the PUSCH resource corresponding to the DMRS port are used to transmit a DMRS sequence corresponding to the DMRS port, where channel estimation may be implemented based on the DMRS sequence. In some embodiments, the DMRS sequence may be generated based on the DMRS scrambling ID, and different DMRS scrambling IDs are used to generate different DMRS sequences. In some embodiments, in some embodiments, the first configuration is capable of configuring N DMRS scrambling IDs, where N is a positive integer and N≤4.

In some embodiments, the network device may transmit the first configuration to the terminal, and the terminal may receive the first configuration. In some embodiments, the network device may transmit the first configuration to the terminal via a first message, where the first message may be, for example, an RRC release message, an SIB 1, etc., but is not limited thereto.

In some embodiments, in some embodiments, the aforementioned CG period may be used for performing the SDT, and the CG period may also be referred to as a "CG-SDT periodicity", a "CG-SDT PUSCH period", etc., but is not limited thereto. In some embodiments, in some embodiments, a duration of the CG period may be relatively long, for example, tens of minutes to several hours.

At step 2102, the terminal determines the first configuration.

In some embodiments, in some embodiments, the terminal may receive the first configuration transmitted by the network device via the first message, where the first message may be, for example, the RRC Release message, the SIB1, etc., but is not limited thereto.

In some embodiments, the terminal directly takes a configuration transmitted by the network device as the first configuration, where the network device determines the configuration and informs the terminal of the configuration. In some other embodiments, the terminal may also determine the first configuration based on a protocol agreement and/or autonomous determination. That is, the network device may transmit the first configuration to the terminal for reference by the terminal, and the terminal does not necessarily apply this configuration, but may autonomously determine the configuration to be applied.

For a detailed introduction to the first configuration, reference may be made to the above embodiments.

At step 2103, the terminal and/or the network device determine one or more PRUs corresponding to one or more POs within the one CG period based on the first configuration.

In some embodiments, in some embodiments, a resource occupied by each DMRS port corresponding to each DMRS sequence on each PO corresponds to one PRU. For example, assume the first configuration configures the following content:

The one CG period includes 2 POs, namely PO#1 and PO#2;

The DMRS mapping type is double-symbol DMRS type 1, i.e., 8 DMRS ports are configured, namely DMRS ports 0 to 7;

**2** DMRS scrambling IDs, namely DMRS scrambling ID#1 and DMRS scrambling ID#2, where DMRS scrambling ID#1 is used to generate DMRS sequence #1, and DMRS scrambling ID#2 is used to generate DMRS sequence #2.

**In** this case, the one CG period may correspond to 32 PRUs, where the resource occupied by DMRS port 0 corresponding to DMRS sequence #1 on PO#1 corresponds to one PRU. For instance, "the resource occupied by DMRS port 0 corresponding to DMRS sequence #1 on PO#1 corresponds to one PRU" may be understood as: the resource corresponding to DMRS port 0 on PO#1 corresponds to one PRU when carrying DMRS sequence #1. Similarly, the resource occupied by DMRS port 0 corresponding to DMRS sequence #2 on PO#1 (i.e., the resource corresponding to DMRS port 0 on PO#1 when carrying DMRS sequence #2) corresponds to another PRU; the resource occupied by DMRS port 1 corresponding to DMRS sequence #1 on PO#1 (i.e., the resource corresponding to DMRS port 1 on PO#1 when carrying DMRS sequence #1) corresponds to yet another PRU; and the resource occupied by DMRS port 1 corresponding to DMRS sequence #2 on PO#1 (i.e., the resource corresponding to DMRS port 1 on PO#1 when carrying DMRS sequence #2) corresponds to a further PRU, and so forth, such that PO#1 corresponds to 16 PRUs.

Likewise, the resource occupied by DMRS port 0 corresponding to DMRS sequence #1 on PO#2 corresponds to one PRU. For instance, "the resource occupied by DMRS port 0 corresponding to DMRS sequence #1 on PO#2 corresponds to one PRU" may be understood as: the resource corresponding to DMRS port 0 on PO#2 corresponds to one PRU when carrying DMRS sequence #1. Similarly, the resource occupied by DMRS port 0 corresponding to DMRS sequence #2 on PO#2 (i.e., the resource corresponding to DMRS port 0 on PO#2 when carrying DMRS sequence #2) corresponds to another PRU; and the resource occupied by DMRS port 1 corresponding to DMRS sequence #1 on PO#2 (i.e., the resource corresponding to DMRS port 1 on PO#2 when carrying DMRS sequence #1) corresponds to yet another PRU, and so forth, such that PO#2 corresponds to 16 PRUs.

At step 2104, the terminal and/or the network device sequentially number the one or more PRUs.

After determining the one or more PRUs in the one CG period, the network device and/or the terminal may number the one or more PRUs. In some embodiments, the one or more PRUs within the one CG period may be sequentially numbered based on at least one of a time domain/frequency domain position of the PO in the one CG period, the DMRS sequence, or the DMRS port. A manner of numbering the one or more PRUs may vary when the count of POs included in the one CG period differs.

In some embodiments, a detailed introduction to the specific method of numbering the one or more PRUs is provided below.

It should be understood that the one CG period may include one PO or a plurality of POs. The one or more PRUs may be numbered in a corresponding manner according to the count of POs included in the one CG period.

When the one CG period includes one PO, the one or more PRUs are sequentially numbered in a first manner. In some embodiments, the first manner may be, for example: numbering one or more PRUs respectively corresponding to one or more DMRS ports corresponding to a first DMRS sequence sequentially, and numbering one or more PRUs respectively corresponding to one or more DMRS ports of a second DMRS sequence sequentially, until PRUs respectively corresponding to DMRS ports corresponding to all DMRS sequences are numbered.

For example, assume the first configuration configures the following content:
The one CG period includes 1 PO, namely PO#1;
The DMRS mapping type is double-symbol DMRS type 1, i.e., 8 DMRS ports are configured, namely DMRS ports 0 to 7;
**2** DMRS scrambling IDs, namely DMRS scrambling ID#1 and DMRS scrambling ID#2, where DMRS scrambling ID#1 is used to generate DMRS sequence #1, and DMRS scrambling ID#2 is used to generate DMRS sequence #2.

In this case, PO#1 corresponds to 16 PRUs (for the specific principle, refer to the introduction in step 2103 above).

A method of sequentially numbering the 16 PRUs corresponding to PO#1 in the above first manner may include: determining a sequence number of a PRU corresponding to the resource occupied by DMRS port 0 corresponding to DMRS sequence #1 on PO#1 (i.e., the PRU corresponding to the resource corresponding to DMRS port 0 on PO#1 when carrying DMRS sequence #1) as "1"; determining a sequence number of a PRU corresponding to the resource occupied by DMRS port 1 corresponding to DMRS sequence #1 on PO#1 (i.e., the PRU corresponding to the resource corresponding to DMRS port 1 on PO#1 when carrying DMRS sequence #1) as "2"; determining a sequence number of a PRU corresponding to the resource occupied by DMRS port 2 corresponding to DMRS sequence #1 on PO#1 (i.e., the PRU corresponding to the resource corresponding to DMRS port 2 on PO#1 when carrying DMRS sequence #1) as "3"; and so forth, until a sequence number of a PRU corresponding to the resource occupied by DMRS port 7 corresponding to DMRS sequence #1 on PO#1 (i.e., the PRU corresponding to the resource corresponding to DMRS port 7 on PO#1 when carrying DMRS sequence #1) is determined as "8"; thereafter, determining a sequence number of a PRU corresponding to the resource occupied by DMRS port 0 corresponding to DMRS sequence #2 on PO#1 (i.e., the PRU corresponding to the resource corresponding to DMRS port 0 on PO#1 when carrying DMRS sequence #2) as "9"; determining a sequence number of a PRU corresponding to the resource occupied by DMRS port 1 corresponding to DMRS sequence #2 on PO#1 (i.e., the PRU corresponding to the resource corresponding to DMRS port 1 on PO#1 when carrying DMRS sequence #2) as "10"; and so forth, until a sequence number of a PRU corresponding to the resource occupied by DMRS port 7 corresponding to DMRS sequence #2 on PO#1 (i.e., the PRU corresponding to the resource corresponding to DMRS port 7 on PO#1 when carrying DMRS sequence #2) is determined as "16", thereby completing the numbering of all PRUs.

In some embodiments, the above example adopts ascending numbering. In other embodiments, descending numbering may also be performed, for example: determining the sequence number of the PRU corresponding to the resource occupied by DMRS port 0 corresponding to DMRS sequence #1 on PO#1 (i.e., the PRU corresponding to the resource corresponding to DMRS port 0 on PO#1 when carrying DMRS sequence #1) as "16"; determining the sequence number of the PRU corresponding to the resource occupied by DMRS port 1 corresponding to DMRS sequence #1 on PO#1 (i.e., the PRU corresponding to the resource corresponding to DMRS port 1 on PO#1 when carrying DMRS sequence #1) as "15"; and so forth, which is not limited by the present disclosure.

In some embodiments, when introducing the first manner, the description takes a numbering sequence of "DMRS ports first, then DMRS sequences" as an example. The first manner may also number the one or more PRUs in a numbering sequence of "DMRS sequences first, then DMRS ports", or other similar manners with analogous principles, which is not specifically limited by the present disclosure.

**In** some embodiments, when the one CG period includes the plurality of POs, PO time domain positions and/or PO frequency domain positions of the plurality of POs within the one CG period are different. A PO time domain position refers to a time domain position where the PO is located, which may be, for example, a symbol, a time slot, etc., but is not limited thereto. A PO frequency domain position refers to a frequency domain position where the PO is located, which may be, for example, a positioning frequency layer (PFL), a component carrier (CC), etc., but is not limited thereto. In this case, the one or more PRUs may be sequentially numbered in a second manner.

**In** some embodiments, the second manner may include: numbering PRUs respectively corresponding to DMRS ports corresponding to all DMRS sequences of POs at all PO frequency domain positions on a first PO time domain position within the one CG period sequentially in a predetermined manner, and numbering PRUs respectively corresponding to DMRS ports corresponding to all DMRS sequences of POs at all PO frequency domain positions on a second PO time domain position within the one CG period sequentially in the predetermined manner, until PRUs respectively corresponding to DMRS ports corresponding to all DMRS sequences of POs at all PO frequency domain positions on all PO time domain positions within the one CG period are numbered.

**In** some embodiments, the predetermined manner may include: numbering one or more PRUs respectively corresponding to one or more DMRS ports corresponding to a first DMRS sequence of a PO at a first PO frequency domain position on a PO time domain position sequentially, and numbering one or more PRUs respectively corresponding to one or more DMRS ports corresponding to a second DMRS sequence of the PO at the first PO frequency domain position on the PO time domain position sequentially, so as to determine sequence numbers of PRUs respectively corresponding to DMRS ports corresponding to all DMRS sequences of the PO at the first PO frequency domain position on the PO time domain position; numbering one or more PRUs respectively corresponding to one or more DMRS ports corresponding to a first DMRS sequence of a PO at a second PO frequency domain position at the PO time domain position sequentially, and numbering one or more PRUs respectively corresponding to one or more DMRS ports corresponding to a second DMRS sequence of the PO at the second PO frequency domain position at the PO time domain position sequentially, so as to determine sequence numbers of PRUs respectively corresponding to DMRS ports corresponding to all DMRS sequences of the PO at the second PO frequency domain position at the PO time domain position, until PRUs respectively corresponding to DMRS ports corresponding to all DMRS sequences of POs at all PO frequency domain positions at the PO time domain position are numbered.

For example, assume the first configuration configures the following content:
One CG period includes 4 POs, namely PO#1, PO#2, PO#3, and PO#4, where PO#1 and PO#2 are located at the same time domain position but different frequency domain positions, PO#3 and PO#4 are located at the same time domain position but different frequency domain positions, the time domain position where PO#1 and PO#2 are located precedes the time domain position where PO#3 and PO#4 are located, the frequency domain position where PO#2 is located is after the frequency domain position where PO#1 is located, and the frequency domain position where PO#4 is located is after the frequency domain position where PO#3 is located. It may be seen therefrom that PO#1 and PO#2 are both on the first PO time domain position in the one CG period, PO#1 is the PO at the first PO frequency domain position on the first PO time domain position, and PO#2 is the PO at the second PO frequency domain position on the first PO time domain position. PO#3 and PO#4 are both on the second PO time domain position in the one CG period, PO#3 is the PO at the first PO frequency domain position on the second PO time domain position, and PO#4 is the PO at the second PO frequency domain position on the second PO time domain position;
The DMRS mapping type is double-symbol DMRS type 1, i.e., 8 DMRS ports are configured, namely DMRS ports 0 to 7;
2 DMRS scrambling IDs, namely DMRS scrambling ID#1 and DMRS scrambling ID#2, where DMRS scrambling ID#1 is used to generate DMRS sequence #1, and DMRS scrambling ID#2 is used to generate DMRS sequence #2.

In this case, the one CG period may correspond to 64 PRUs, where PO#1 corresponds to 16 PRUs, PO#2 corresponds to 16 PRUs, PO#3 corresponds to 16 PRUs, and PO#4 corresponds to 16 PRUs (for the specific principle, refer to the introduction in step 2103 above).

A method of sequentially numbering the 64 PRUs corresponding to the one CG period in the above second manner may include: determining a sequence number of a PRU corresponding to DMRS port 0 corresponding to the first DMRS sequence of the PO at the first PO frequency domain position on the first PO time domain position (i.e., the PRU corresponding to the resource corresponding to DMRS port 0 on PO#1 when carrying DMRS sequence #1) as "1"; determining a sequence number of a PRU corresponding to DMRS port 1 corresponding to the first DMRS sequence of the PO at the first PO frequency domain position on the first PO time domain position (i.e., the PRU corresponding to the resource corresponding to DMRS port 1 on PO#1 when carrying DMRS sequence #1) as "2"; determining a sequence number of a PRU corresponding to DMRS port 2 corresponding to the first DMRS sequence of the PO at the first PO frequency domain position on the first PO time domain position (i.e., the PRU corresponding to the resource corresponding to DMRS port 2 on PO#1 when carrying DMRS sequence #1) as "3"; and so forth, until a sequence number of a PRU corresponding to DMRS port 7 corresponding to the first DMRS sequence of the PO at the first PO frequency domain position on the first PO time domain position (i.e., the PRU corresponding to the resource corresponding to DMRS port 7 on PO#1 when carrying DMRS sequence #1) is determined as "8"; then determining a sequence number of a PRU corresponding to DMRS port 0 corresponding to the second DMRS sequence of the PO at the first PO frequency domain position on the first PO time domain position (i.e., the PRU corresponding to the resource corresponding to DMRS port 0 on PO#1 when carrying DMRS sequence #2) as "9"; determining a sequence number of a PRU corresponding to DMRS port 1 corresponding to the second DMRS sequence of the PO at the first PO frequency domain position on the first PO time domain position (i.e., the PRU corresponding to the resource corresponding to DMRS port 1 on PO#1 when carrying DMRS sequence #2) as "10"; and so forth, until a sequence number of a PRU corresponding to DMRS port 7 corresponding to the second DMRS sequence of the PO at the first PO frequency domain position on the first PO time domain position (i.e., the PRU corresponding to the resource corresponding to DMRS port 7 on PO#1 when carrying DMRS sequence #2) is determined as "16"; thereafter, determining a sequence number of a PRU corresponding to DMRS port 0 corresponding to the first DMRS sequence of the PO at the second PO frequency domain position on the first PO time domain position (i.e., the PRU corresponding to the resource corresponding to DMRS port 0 on PO#2 when carrying DMRS sequence #1) as "17"; determining a sequence number of a PRU corresponding to DMRS port 1 corresponding to the first DMRS sequence of the PO at the second PO frequency domain position on the first PO time domain position (i.e., the PRU corresponding to the resource corresponding to DMRS port 1 on PO#2 when carrying DMRS sequence #1) as "18"; and so forth, until a sequence number of a PRU corresponding to DMRS port 7 corresponding to the first DMRS sequence of the PO at the second PO frequency domain position on the first PO time domain position (i.e., the PRU corresponding to resources corresponding to DMRS port 7 on PO#2 when carrying DMRS sequence #1) is determined as "24"; then determining a sequence number of a PRU corresponding to DMRS port 0 corresponding to the second DMRS sequence of the PO at the second PO frequency domain position on the first PO time domain position (i.e., the PRU corresponding to the resource corresponding to DMRS port 0 on PO#2 when carrying DMRS sequence #2) as "25"; determining a sequence number of a PRU corresponding to DMRS port 1 corresponding to the second DMRS sequence of the PO at the second PO frequency domain position on the first PO time domain position (i.e., the PRU corresponding to the resource corresponding to DMRS port 1 on PO#2 when carrying DMRS sequence #2) as "26"; and so forth, until a sequence number of a PRU corresponding to DMRS port 7 corresponding to the second DMRS sequence of the PO at the second PO frequency domain position on the first PO time domain position (i.e., the PRU corresponding to the resource corresponding to DMRS port 7 on PO#2 when carrying DMRS sequence #2) is determined as "32", thereby completing the numbering of the PRUs respectively corresponding to the DMRS ports corresponding to all DMRS sequences of the POs at all PO frequency domain positions on the first PO time domain position.

Thereafter, similarly, a method further includes: determining a sequence number of a PRU corresponding to DMRS port 0 corresponding to the first DMRS sequence of the PO at the first PO frequency domain position on the second PO time domain position (i.e., the PRU corresponding to the resource corresponding to DMRS port 0 on PO#3 when carrying DMRS sequence #1) as "33"; determining a sequence number of a PRU corresponding to DMRS port 1 corresponding to the first DMRS sequence of the PO at the first PO frequency domain position on the second PO time domain position (i.e., the PRU corresponding to resource corresponding to DMRS port 1 on PO#3 when carrying DMRS sequence #1) as "34"; and so forth, until a sequence number of a PRU corresponding to DMRS port 7 corresponding to the first DMRS sequence of the PO at the first PO frequency domain position on the second PO time domain position (i.e., the PRU corresponding to the resource corresponding to DMRS port 7 on PO#3 when carrying DMRS sequence #1) is determined as "40"; then determining a sequence number of a PRU corresponding to DMRS port 0 corresponding to the second DMRS sequence of the PO at the first PO frequency domain position on the second PO time domain position (i.e., the PRU corresponding to the resource corresponding to DMRS port 0 on PO#3 when carrying DMRS sequence #2) as "41"; determining a sequence number of a PRU corresponding to DMRS port 1 corresponding to the second DMRS sequence of the PO at the first PO frequency domain position on the second PO time domain position (i.e., the PRU corresponding to the resource corresponding to DMRS port 1 on PO#3 when carrying DMRS sequence #2) as "42"; and so forth, until a sequence number of a PRU corresponding to DMRS port 7 corresponding to the second DMRS sequence of the PO at the first PO frequency domain position on the second PO time domain position (i.e., the PRU corresponding to the resource corresponding to DMRS port 7 on PO#3 when carrying DMRS sequence #2) is determined as "48"; thereafter, determining a sequence number of a PRU corresponding to DMRS port 0 corresponding to the first DMRS sequence of the PO at the second PO frequency domain position on the second PO time domain position (i.e., the PRU corresponding to the resource corresponding to DMRS port 0 on PO#4 when carrying DMRS sequence #1) as "49"; determining a sequence number of a PRU corresponding to DMRS port 1corresponding to the first DMRS sequence of the PO at the second PO frequency domain position on the second PO time domain position (i.e., the PRU corresponding to the resource corresponding to DMRS port 1 on PO#4 when carrying DMRS sequence #1) as "50"; and so forth, until a sequence number of a PRU corresponding to DMRS port 7 corresponding to the first DMRS sequence of the PO at the second PO frequency domain position on the second PO time domain position (i.e., the PRU corresponding to the resource corresponding to DMRS port 7 on PO#4 when carrying DMRS sequence #1) is determined as "56"; then determining a sequence number of a PRU corresponding to DMRS port 0 corresponding to the second DMRS sequence of the PO at the second PO frequency domain position on the second PO time domain position (i.e., the PRU corresponding to the resource corresponding to DMRS port 0 on PO#4 when carrying DMRS sequence #2) as "57"; determining a sequence number of a PRU corresponding to DMRS port 1 corresponding to the second DMRS sequence of the PO at the second PO frequency domain position on the second PO time domain position (i.e., the PRU corresponding to the resource corresponding to DMRS port 1 on PO#4 when carrying DMRS sequence #2) as "58"; and so forth, until a sequence number of a PRU corresponding to DMRS port 7corresponding to the second DMRS sequence of the PO at the second PO frequency domain position on the second PO time domain position (i.e., the PRU corresponding to the resource corresponding to DMRS port 7 on PO#4 when carrying DMRS sequence #2) is determined as "64", thereby completing the numbering of the PRUs respectively corresponding to the DMRS ports corresponding to all DMRS sequences of the POs at all PO frequency domain positions on the second PO time domain position.

In some embodiments, the above example adopts ascending numbering. In other embodiments, descending numbering may also be performed, for example: determining the sequence number of the PRU corresponding to DMRS port 0 corresponding to the first DMRS sequence of the PO at the first PO frequency domain position on the first PO time domain position (i.e., the PRU corresponding to the resource corresponding to DMRS port 0 on PO#1 when carrying DMRS sequence #1) as "64"; determining the sequence number of the PRU corresponding to DMRS port 1 corresponding to the first DMRS sequence of the PO at the first PO frequency domain position on the first PO time domain position (i.e., the PRU corresponding to the resource corresponding to DMRS port 1 on PO#1 when carrying DMRS sequence #1) as "63"; and so forth, which is not limited by the present disclosure.

In some embodiments, when introducing the second manner, the description takes a numbering sequence of "DMRS ports first, then DMRS sequences, then PO frequency domain positions, then PO time domain positions" as an example. The second manner may also number the PRUs in a numbering sequence of "DMRS ports first, then DMRS sequences, then PO time domain positions, then PO frequency domain positions", or other similar manners with analogous principles. Alternatively, if different POs in the one CG period configured by the network device differ only in time domain positions, the second manner may also number the PRUs in a numbering sequence of "DMRS ports first, then DMRS sequences, then PO time domain positions"; or if different POs in the one CG period configured by the network device differ only in frequency domain positions, the second manner may also number the PRUs in a numbering sequence of "DMRS ports first, then DMRS sequences, then PO frequency domain positions", which is not specifically limited by the present disclosure.

It should be understood that the specific numbering manners illustrated above are exemplary descriptions of the present disclosure, and other similar numbering manners shall also fall within the protection scope of the present disclosure, which is not specifically limited herein.

At step 2105, the network device transmits a second configuration.

**In** some embodiments, in some embodiments, the second configuration may be used to configure at least one of:
the one or more SSBs corresponding to the one CG period; for example, the second configuration may be used to configure SSB indices respectively corresponding to the one or more SSBs corresponding to the one CG period, and in some embodiments, the SSB indices configured by the second configuration may be non-consecutive;
a mapping ratio between the one or more SSBs and the one or more PRUs; in some embodiments, the mapping ratio may be, for example: H SSBs are mapped to one PRU, where H may be configured by the network device, and H takes values in {1/8, 1/4, 1/2, 1, 2, 4, 8, 16}. When H takes a value of 1/8, it means one SSB is mapped to eight PRUs, i.e., one SSB needs to have a mapping relationship with eight PRUs; when H takes a value of 2, it means two SSBs are mapped to one PRU, i.e., two SSBs need to have a mapping relationship with the same PRU. It should be noted that the "mapping relationship" mentioned in the embodiments of the present disclosure may be understood as an "association relationship", a "correspondence relationship", etc., which is not limited herein. Furthermore, the subsequent expression of "mapping a certain SSB to a certain PRU" may be understood as "determining that a certain SSB has an association relationship with a certain PRU", "determining that a certain SSB has a correspondence relationship with a certain PRU", etc., which is not limited herein.

**In** some embodiments, the network device may transmit the second configuration to the terminal, and the terminal may receive the second configuration. In some embodiments, the network device may transmit the second configuration to the terminal via the first message, where the first message may be, for example, the RRC release message, the SIB1, etc., but is not limited thereto.

**In** some embodiments, the present disclosure does not limit the order between step 2101 and step 2105 above; the two steps may be performed simultaneously, or step 2105 may be performed first followed by step 2101, or step 2101 may be performed first followed by step 2105.

At step 2106, the terminal determines the second configuration.

In some embodiments, in some embodiments, the terminal may receive the second configuration transmitted by the network device via the first message, where the first message may be, for example, the RRC Release message, the SIB1, etc., but is not limited thereto. That is, the first configuration and the second configuration may be carried by the same signaling. Alternatively, the network device may also transmit the second configuration to the terminal via a second message different from a signaling carrying the first configuration, so that the terminal receives the second configuration carried by the second message.

**In** some embodiments, in some other embodiments, the terminal may also determine the second configuration based on a protocol agreement and/or autonomous determination.

For a detailed introduction to the second configuration, reference may be made to the above embodiments.

**In** some embodiments, in some embodiments, the first configuration and/or the second configuration above enables M rounds of mapping to be performed from all SSBs corresponding to the one CG period to PRUs within the one CG period, where M is a positive integer. In some embodiments, the M rounds of mapping may be understood as follows: when the mapping relationship between all the SSBs corresponding to the one CG period and PRUs within the one CG period is determined respectively for the first time, it is determined that a first round of mapping from all the SSBs corresponding to the one CG period to the PRUs within the one CG period is complete; and after the first round of mapping is completed, if the mapping relationship between all the SSBs corresponding to the one CG period and other PRUs within the one CG period except the PRUs used in the first round of mapping is determined, it is determined that a second round of mapping from all the SSBs corresponding to the one CG period to PRUs within the one CG period is completed. Similarly, after the second round of mapping is completed, if the mapping relationship between all the SSBs corresponding to the one CG period and other PRUs within the one CG period except the PRUs used in the first round and the second round of mapping is determined, it is determined that a third round of mapping from all the SSBs corresponding to the one CG period to PRUs within the one CG period is completed, and so forth, until M rounds of mapping are completed.

For example, assume one CG period corresponds to 8 PRUs, and the one CG period corresponds to 3 SSBs, namely SSB#1, SSB#2, and SSB#3, where the mapping ratio is assumed to be one SSB mapped to one PRU. Then SSB#1, SSB#2, and SSB#3 may be respectively mapped to three of the 8 PRUs to complete the first round of mapping; thereafter, SSB#1, SSB#2, and SSB#3 may be respectively mapped to three of the remaining five PRUs except the PRUs used in the first round of mapping to complete the second round of mapping.

In some embodiments, in some embodiments, the above statement that "the first configuration and/or the second configuration enable M rounds of mapping to be performed from all the SSBs corresponding to the one CG period to the PRUs within the one CG period" mainly requires that a certain condition be satisfied among the total count of PRUs determinable by the first configuration, the mapping ratio configured by the second configuration, and the total count of SSBs corresponding to the one CG period configured by the second configuration, so that M rounds of mapping from all the SSBs corresponding to the one CG period to the PRUs within the one CG period may be performed.

For example, assume it is required to enable one round of mapping from all the SSBs corresponding to the one CG period to the PRUs within the one CG period. If the first configuration configures the following: one CG period includes one PO, the DMRS mapping type is single-symbol DMRS type 1, and one DMRS scrambling ID is configured, then 8 PRUs may be determined based on the first configuration (for the specific principle, refer to the introduction in step 2103 above). In this case, if the second configuration configures 8 SSBs corresponding to the one CG period, the mapping ratio configured by the second configuration shall satisfy the following condition: F SSBs are mapped to one PRU, where F is less than or equal to 1. Only in this way can it be ensured that each SSB corresponding to the one CG period may be mapped to one or more PRUs to complete one round of mapping from SSBs to PRUs.

As another example, assume it is required to enable two rounds of mapping from all the SSBs corresponding to the one CG period to the PRUs within the one CG period. If the first configuration configures the following: one CG period includes one PO, the DMRS mapping type is single-symbol DMRS type 1, and one DMRS scrambling ID is configured, then 8 PRUs may be determined based on the first configuration (for the specific principle, refer to the introduction in step 2103 above). In this case, if the mapping ratio configured by the second configuration is one SSB mapped to one PRU, the second configuration configures the one CG period to correspond to at most 4 SSBs. Only in this way can it be ensured that two rounds of mapping from all the SSBs corresponding to the one CG period to the PRUs within the one CG period may be performed.

In some embodiments, in some embodiments, the above statement that "the first configuration and/or the second configuration enable M rounds of mapping to be performed from all the SSBs corresponding to the one CG period to the PRUs within the one CG period" may include the following two scenarios: the first configuration and/or the second configuration enable M rounds of mapping to be performed from all the SSBs corresponding to the one CG period to the PRUs within the one CG period, and no unmapped PRUs remain; or the first configuration and/or the second configuration enable M rounds of mapping to be performed from all the SSBs corresponding to the one CG period to the PRUs within the one CG period, and one or more unmapped PRUs remain.

In some embodiments, the present disclosure does not limit the order between step 2102 and step 2106 above; the two steps may be performed simultaneously, or step 2106 may be performed first followed by step 2102, or step 2102 may be performed first followed by step 2106.

At step 2107, the terminal and/or the network device determine the mapping relationship between the one or more SSBs corresponding to the one CG period and the one or more PRUs within the one CG period based on the second configuration and sequence numbers of the one or more PRUs.

In some embodiments, in some embodiments, determining the mapping relationship between the one or more SSBs corresponding to the one CG period and the one or more PRUs within the one CG period may include at least one of the following steps.

At step a, the mapping relationship between all SSBs corresponding to the one CG period and PRUs within the one CG period is determined respectively, so as to complete one round of mapping from SSBs to PRUs within the one CG period.

In some embodiments, one round of mapping from SSBs to PRUs within the one CG period may be completed according to the mapping ratio, the SSB indices of all the SSBs corresponding to the one CG period, and the sequence numbers of the PRUs.

For example, all the SSBs corresponding to the one CG period may be mapped to the PRUs in an ascending mapping manner according to the mapping ratio, so as to complete one round of mapping from SSBs to PRUs. For instance, assume the SSB indices of all the SSBs corresponding to the one CG period are SSB#1, SSB#2, SSB#3, and SSB#5; the one CG period corresponds to 8 PRUs numbered 1 to 8, and the mapping ratio is one SSB mapped to one PRU. Then SSB#1 may be mapped to the PRU numbered "1", SSB#2 to the PRU numbered "2", SSB#3 to the PRU numbered "3", and SSB#5 to the PRU numbered "4", thereby completing one round of mapping.

Alternatively, all the SSBs corresponding to the one CG period may be mapped to the PRUs in a descending mapping manner according to the mapping ratio, so as to complete one round of mapping from SSBs to PRUs. For instance, assume the SSB indices of all the SSBs corresponding to the one CG period are SSB#1, SSB#2, SSB#3, and SSB#5; the CG period corresponds to 8 PRUs numbered 1 to 8, and the mapping ratio is one SSB mapped to one PRU. Then SSB#1 may be mapped to the PRU numbered "8", SSB#2 to the PRU numbered "7", SSB#3 to the PRU numbered "6", and SSB#5 to the PRU numbered "5", thereby completing one round of mapping.

At step b, in a case where one or more PRUs unmapped to any SSB remain within the one CG period, and the one or more PRUs unmapped to any SSB are capable of completing another round of mapping from the SSBs to the PRUs, the mapping relationship between all the SSBs corresponding to the one CG period and the one or more PRUs unmapped to any SSB within the one CG period is determined respectively, so as to complete another round of mapping from the SSBs to the PRUs within the one CG period.

**For** example, assume the SSB indices of all the SSBs corresponding to the one CG period are SSB#1, SSB#2, SSB#3, and SSB#5; the one CG period corresponds to 8 PRUs numbered 1 to 8, and the mapping ratio is one SSB mapped to one PRU. Mapping of SSB#1 to the PRU numbered "1", SSB#2 to the PRU numbered "2", SSB#3 to the PRU numbered "3", and SSB#5 to the PRU numbered "4" has been completed, and 4 PRUs (i.e., the PRUs numbered "5 to 8") remain unmapped. Since the mapping ratio is one SSB mapped to one PRU and there are 4 SSBs corresponding to the one CG period, 4 PRUs are required to complete one round of mapping from all 4 SSBs to PRUs, and the remaining 4 PRUs are sufficient for such a round. Thus, all SSBs corresponding to the one CG period may be mapped to the remaining 4 PRUs respectively. For example, SSB#1 may be mapped to the PRU numbered "8", SSB#2 to the PRU numbered "7", SSB#3 to the PRU numbered "6", and SSB#5 to the PRU numbered "5", thereby completing a further round of mapping.

At step c, in a case where PRUs unmapped to any SSB are absent from the one CG period, and/or one or more PRUs unmapped to any SSB remain within the one CG period but the one or more PRUs unmapped to any SSB are incapable of completing another round of mapping from the SSBs to the PRUs, the mapping is terminated.

**For** example, assume the SSB indices of all the SSBs corresponding to the one CG period are SSB#1, SSB#2, SSB#3, and SSB#5; the one CG period corresponds to 4 PRUs numbered 1 to 4, and the mapping ratio is one SSB mapped to one PRU. Mapping of SSB#1 to the PRU numbered "1", SSB#2 to the PRU numbered "2", SSB#3 to the PRU numbered "3", and SSB#5 to the PRU numbered "4" has been completed, and there are no unmapped PRUs within the one CG period, so the mapping may be terminated.

As another example, assume the SSB indices of all the SSBs corresponding to the one CG period are SSB#1, SSB#2, SSB#3, SSB#5, and SSB#6; the one CG period corresponds to 8 PRUs numbered 1 to 8, and the mapping ratio is one SSB mapped to one PRU. Mapping of SSB#1 to the PRU numbered "1", SSB#2 to the PRU numbered "2", SSB#3 to the PRU numbered "3", SSB#5 to the PRU numbered "4", and SSB#6 to the PRU numbered "5" has been completed, and 3 PRUs (i.e., the PRUs numbered "6 to 8") remain unmapped. Since the mapping ratio is one SSB mapped to one PRU and there are 5 SSBs corresponding to the one CG period, 5 PRUs are required to complete one round of mapping from all 5 SSBs to PRUs, and the remaining 3 PRUs are insufficient for such a round, so the mapping may be terminated.

It should be noted that, in some embodiments, the above "method for determining the mapping relationship between the one or more SSBs corresponding to the one CG period and the one or more PRUs within the one CG period" may include one or more of step a, step b, and step c. For example, it may include only step a, only step b, only step c, or step a + step b, step a + step c, step b + step c, or step a + step b + step c, which is not limited by the present disclosure.

It should be noted that, in some embodiments, after determining the above mapping relationship, the terminal may transmit the mapping relationship to the network device, or after determining the above mapping relationship, the network device may transmit the mapping relationship to the terminal, which is not specifically limited by the present disclosure.

At step 2108, the terminal determines a target PRU.

**In** some embodiments, an SSB mapped to the target PRU is associated with a target downlink beam, and the target PRU indicates the target downlink beam. The target downlink beam may be an optimal downlink beam.

**In** some embodiments, the terminal may measure a beam quality of beams respectively associated with all SSBs corresponding to the one CG period, determine the target downlink beam with the best quality, and then determine the target PRU mapped to the SSB associated with the target downlink beam.

**For** example, assume the SSB indices of all the SSBs corresponding to the one CG period are SSB#1, SSB#2, SSB#3, SSB#5, and SSB#6; the one CG period corresponds to 8 PRUs numbered 1 to 8, where SSB#1 is mapped to the PRU numbered "1", SSB#2 to the PRU numbered "2", SSB#3 to the PRU numbered "3", SSB#5 to the PRU numbered "4", and SSB#6 to the PRU numbered "5". In this case, in a case where the terminal measures that a beam associated with SSB#5 has the best beam quality, the terminal may determine the PRU numbered "4" as the target PRU.

At step 2109, the terminal transmits data to the network device by using the target PRU.

**For** example, assume the SSB indices of all the SSBs corresponding to the one CG period are SSB#1, SSB#2, SSB#3, SSB#5, and SSB#6; the one CG period corresponds to 8 PRUs numbered 1 to 8, where SSB#1 is mapped to the PRU numbered "1", SSB#2 to the PRU numbered "2", SSB#3 to the PRU numbered "3", SSB#5 to the PRU numbered "4", and SSB#6 to the PRU numbered "5". The PRU numbered "1" is the resource occupied by DMRS port 0 corresponding to DMRS sequence #1 on PO#1; the PRU numbered "2" is the resource occupied by DMRS port 1 corresponding to DMRS sequence #1 on PO#1; the PRU numbered "3" is the resource occupied by DMRS port 2 corresponding to DMRS sequence #1 on PO#1; the PRU numbered "4" is the resource occupied by DMRS port 3 corresponding to DMRS sequence #1 on PO#1; the PRU numbered "5" is the resource occupied by DMRS port 4 corresponding to DMRS sequence #1 on PO#1; the PRU numbered "6" is the resource occupied by DMRS port 5 corresponding to DMRS sequence #1 on PO#1; the PRU numbered "7" is the resource occupied by DMRS port 6 corresponding to DMRS sequence #1 on PO#1; and the PRU numbered "8" is the resource occupied by DMRS port 7 corresponding to DMRS sequence #1 on PO#1.

In this case, in a case where the target PRU determined by the terminal is the PRU numbered "4", a method for the terminal to transmit data to the network device by using the target PRU may be: transmitting data by using PO#1, and when transmitting data by using PO#1, further carrying DMRS sequence #1 by using the resource corresponding to DMRS port 3 on PO#1. In some embodiments, in the embodiments of the present disclosure, a single-layer single-DMRS-port transmission is supported when data is transmitted to the network device by using the target PRU.

In some embodiments, the terminal transmits data to the network device by using the target PRU, so as to implicitly indicate the above target downlink beam to the network device. For a specific description of how the network device determines the target downlink beam based on the implicit indication of the terminal, reference may be made to the subsequent step 2110.

Furthermore, in some embodiments, when the terminal transmits data by using a PO in the above manner, the PO may also be configured with a repetitive transmission. For example, when a current communication environment is poor, the network device may configure a repetition period for the PO, so that after data is transmitted on the PO, the data previously transmitted on the PO is repeatedly transmitted after one repetition period elapses. For instance, assume a certain PO is located at a first time domain position of a CG period, the network device configures the repetitive transmission, and the repetition period is 3 time domain positions. Then after the terminal transmits data at the first time-domain position, the terminal may repeatedly transmit the data at a fourth time-domain position.

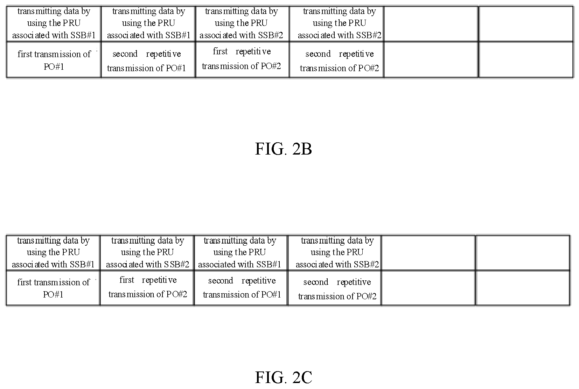

In some embodiments, in some embodiments, when the one CG period includes a plurality of POs, the plurality of POs are configured with repetitive transmissions respectively, and the repetitive transmissions corresponding to the plurality of POs are performed sequentially or alternately. In some embodiments, FIG. 2B is a schematic diagram of repetitive transmissions between different PO performing sequentially according to an embodiment of the present disclosure; FIG. 2C is a schematic diagram of repetitive transmissions between different PO performing alternately according to an embodiment of the present disclosure. As shown in FIGS. 2B and 2C, assume the one CG period includes two POs, namely PO#1 and PO#2, where 2 times of repetitive transmission are configured for both PO#1 and PO#2. With reference to FIG. 2B, the repetitive transmissions between PO#1 and PO#2 may be performed sequentially, i.e., a first transmission of PO#1 and a second repetitive transmission of PO#1 are performed successively first, and then a first transmission of PO#2 and a second repetitive transmission of PO#2 are performed successively. With reference to FIG. 2C, the repetitive transmission between PO#1 and PO#2 may be performed alternately, i.e., the first transmission of PO#1 and the first transmission of PO#2 are performed successively first, and then the second repetitive transmission of PO#1 and the second repetitive transmission of PO#2 are performed successively. Different POs use different PRUs during repetitive transmission. For example, during the repetitive transmission of PO#1, data may be transmitted by using the PRU associated with SSB#1, and during the repetitive transmission of PO#2, data may be transmitted by using the PRU associated with SSB#2.

At step 2110, the network device determines the target downlink beam based on the transmission of the terminal.

**In** some embodiments, when receiving the data, the network device may determine which specific PRU is used to transmit the data so as to determine the target PRU. Thereafter, the network device may determine the target SSB mapped to the target PRU based on the mapping relationship between SSBs and PRUs, and determine the beam associated with the target SSB as the target downlink beam, where the target downlink beam is the optimal downlink beam.

At step 2111, data is transmitted to the terminal by using the target downlink beam.

The mapping method involved in the embodiments of the present disclosure may include at least one of steps S2101 to S2111. For example, step S2101 may be implemented as an independent embodiment, step S2102 may be implemented as an independent embodiment, Step S2103 may be implemented as an independent embodiment, and steps S2101 + S2102 may be implemented as an independent embodiment, but is not limited thereto.

In the present embodiment or example, the steps may be implemented independently, combined arbitrarily, or performed in a swapped order without contradiction; optional modes or optional examples may be combined arbitrarily, and may also be combined arbitrarily with any steps of other embodiments or examples.

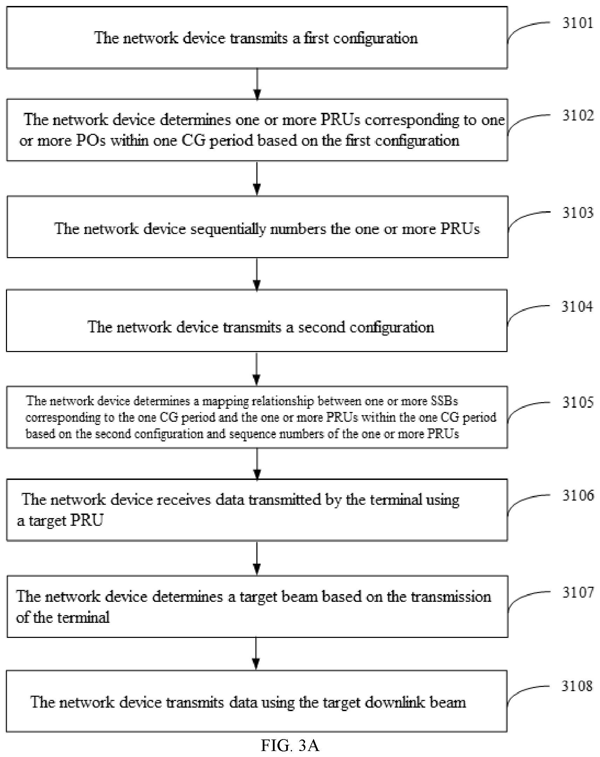

FIG. 3A is an interactive schematic diagram of a mapping method according to an embodiment of the present disclosure. As shown in FIG. 3A, an embodiment of the present disclosure relates to a mapping method applied to the network device 101, and the mapping method includes the following steps.

At step 3101, the network device transmits a first configuration.

At step 3102, the network device determines one or more PRUs corresponding to one or more POs within one CG period based on the first configuration.

At step 3103, the network device sequentially numbers the one or more PRUs.

At step 3104, the network device transmits a second configuration.

At step 3105, the network device determines a mapping relationship between one or more SSBs corresponding to the one CG period and the one or more PRUs within the one CG period based on the second configuration and sequence numbers of the one or more PRUs.

At step 3106, the network device receives data transmitted by the terminal using a target PRU.

At step 3107, the network device determines a target beam based on the transmission of the terminal.

At step 3108, the network device transmits data using the target downlink beam.

For a detailed description of steps 3101 to 3108, reference may be made to the above embodiments.

The mapping method involved in the embodiment of the present disclosure may include at least one of steps S3101 to S3108. For example, step S3101 may be implemented as an independent embodiment, step S3102 may be implemented as an independent embodiment, and steps S3101 + S3102 may be implemented as an independent embodiment, which is not limited thereto.

In the present implementation or embodiment, the steps may be implemented independently, combined arbitrarily, or performed in a swapped order without contradiction; optional modes or optional examples may be combined arbitrarily, and may also be combined arbitrarily with any steps of other implementations or embodiments.

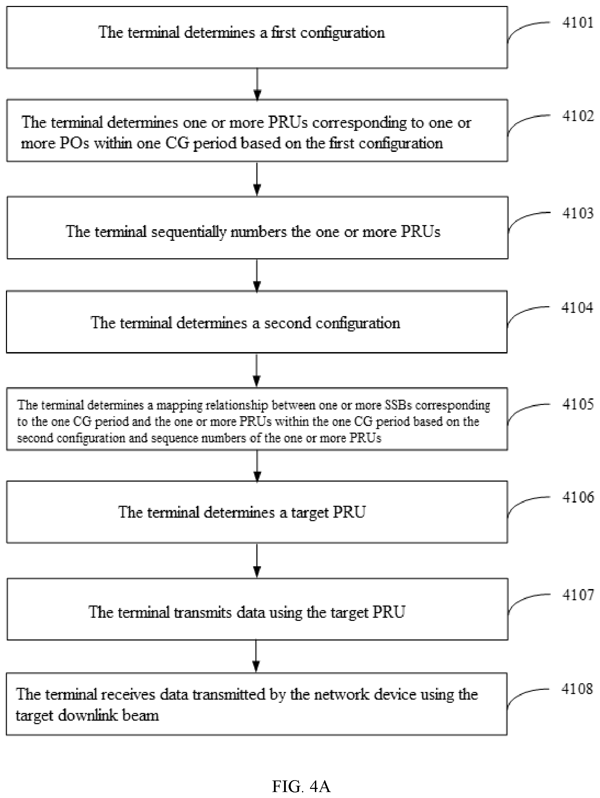

FIG. 4A is an interactive schematic diagram of a mapping method according to an embodiment of the present disclosure. As shown in FIG. 4A, an embodiment of the present disclosure relates to a mapping method applied to the terminal 102, and the mapping method includes the following steps.

At step 4101, the terminal determines a first configuration.

At step 4102, the terminal determines one or more PRUs corresponding to one or more POs within one CG period based on the first configuration.

At step 4103, the terminal sequentially numbers the one or more PRUs.

At step 4104, the terminal determines a second configuration.

At step 4105, the terminal determines a mapping relationship between one or more SSBs corresponding to the one CG period and the one or more PRUs within the one CG period based on the second configuration and sequence numbers of the one or more PRUs.

At step 4106, the terminal determines a target PRU.

At step 4107, the terminal transmits data using the target PRU.

At step 4108, the terminal receives data transmitted by the network device using the target downlink beam.

For a detailed description of steps 4101 to 4108, reference may be made to the content of the foregoing embodiments.

The mapping method involved in the embodiment of the present disclosure may include at least one of steps S4101 to S4108. For example, step S4101 may be implemented as an independent embodiment, and step S4102 may be implemented as an independent embodiment, which is not limited thereto.

In the present implementation or embodiment, the steps may be implemented independently, combined arbitrarily, or performed in a swapped order without contradiction; optional modes or optional examples may be combined arbitrarily, and may also be combined arbitrarily with any steps of other implementations or embodiments.

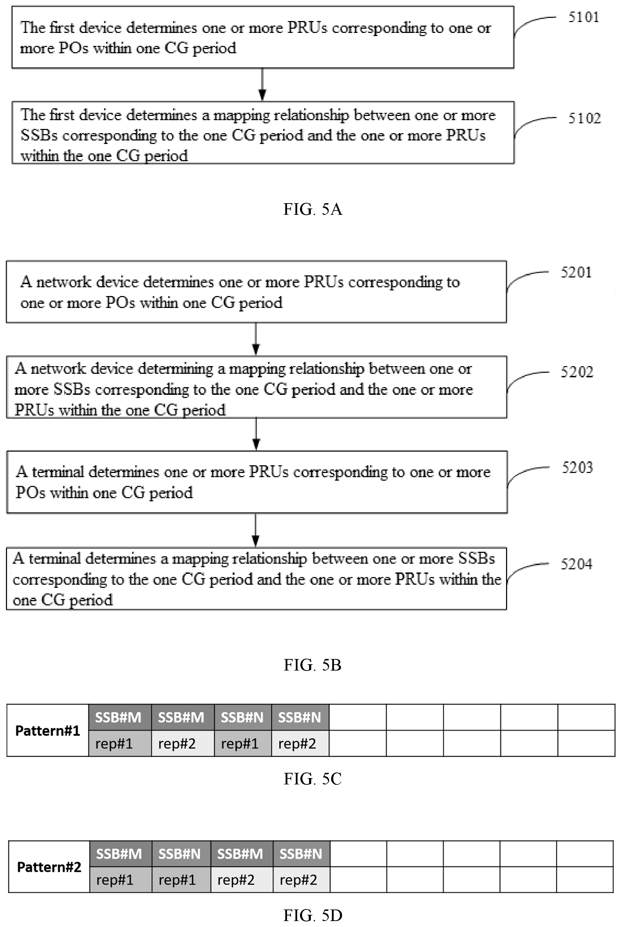

FIG. 5A is an interactive schematic diagram of a mapping method according to an embodiment of the present disclosure. As shown in FIG. 5A, an embodiment of the present disclosure relates to a mapping method applied to a first device, and the method includes,

At step 5101, the first device determines one or more PRUs corresponding to one or more POs within one CG period.

At step 5102, the first device determines a mapping relationship between one or more SSBs corresponding to the one CG period and the one or more PRUs within the one CG period.

In some embodiments, determining the one or more PRUs corresponding to the one or more POs within the one CG period comprises:
determining a first configuration, wherein the first configuration is used to configure at least one of: a count of POs within the one CG period, or a demodulation reference signal (DMRS) configuration corresponding to a PO, wherein the DMRS configuration comprises at least one of: a DMRS mapping type, a DMRS port or a DMRS scrambling identifier (ID), and different DMRS scrambling IDs are used to generate different DMRS sequences; and
determining the one or more PRUs corresponding to the one or more POs within the one CG period based on the first configuration, and numbering the one or more PRUs sequentially, wherein a resource occupied by the DMRS port corresponding to a DMRS sequence on the PO corresponds to one PRU respectively.

In some embodiments, the DMRS mapping type comprises DMRS type 1 and/or DMRS type 2; and
the first configuration is capable of configuring N DMRS scrambling IDs, where N is a positive integer and N≤4.

In some embodiments, numbering the one or more PRUs sequentially comprises:
numbering the one or more PRUs sequentially in a first manner, wherein the one CG period comprises one PO; and
numbering the one or more PRUs sequentially in a second manner, wherein the one CG period comprises a plurality of POs.

In some embodiments, the first manner comprises:
numbering one or more PRUs respectively corresponding to one or more DMRS ports corresponding to a first DMRS sequence sequentially, and numbering one or more PRUs respectively corresponding to one or more DMRS ports of a second DMRS sequence sequentially, until PRUs respectively corresponding to DMRS ports corresponding to all DMRS sequences are numbered.

In some embodiments, PO time domain positions and/or PO frequency domain positions of the plurality of POs within the one CG period are different, wherein a PO time domain position refers to a time domain position where the PO is located, and a PO frequency domain position refers to a frequency domain position where the PO is located.

In some embodiments, the second manner comprises:
numbering PRUs respectively corresponding to DMRS ports corresponding to all DMRS sequences of POs at all PO frequency domain positions on a first PO time domain position within the one CG period sequentially in a predetermined manner, and numbering PRUs respectively corresponding to DMRS ports corresponding to all DMRS sequences of POs at all PO frequency domain positions on a second PO time domain position within the one CG period sequentially in the predetermined manner, until PRUs respectively corresponding to DMRS ports corresponding to all DMRS sequences of POs at all PO frequency domain positions on all PO time domain positions within the one CG period are numbered.

In some embodiments, the predetermined manner comprises:
numbering one or more PRUs respectively corresponding to one or more DMRS ports corresponding to a first DMRS sequence of a PO at a first PO frequency domain position on a PO time domain position sequentially, and numbering one or more PRUs respectively corresponding to one or more DMRS ports corresponding to a second DMRS sequence of the PO at the first PO frequency domain position on the PO time domain position sequentially, so as to determine sequence numbers of PRUs respectively corresponding to DMRS ports corresponding to all DMRS sequences of the PO at the first PO frequency domain position on the PO time domain position; numbering one or more PRUs respectively corresponding to one or more DMRS ports corresponding to a first DMRS sequence of a PO at a second PO frequency domain position on the PO time domain position sequentially, and numbering one or more PRUs respectively corresponding to one or more DMRS ports corresponding to a second DMRS sequence of the PO at the second PO frequency domain position on the PO time domain position sequentially, so as to determine sequence numbers of PRUs respectively corresponding to DMRS ports corresponding to all DMRS sequences of the PO at the second PO frequency domain position on the PO time domain position, until PRUs respectively corresponding to DMRS ports corresponding to all DMRS sequences of POs at all PO frequency domain positions on the PO time domain position are numbered.

In some embodiments, determining the mapping relationship between the one or more SSBs corresponding to the one CG period and the one or more PRUs within the one CG period comprises:
determining a second configuration, wherein the second configuration is used to configure at least one of: the one or more SSBs corresponding to the one CG period, or a mapping ratio between the one or more SSBs and the one or more PRUs; and
determining, based on the second configuration and sequence numbers of the one or more PRUs, the mapping relationship between the one or more SSBs corresponding to the one CG period and the one or more PRUs within the one CG period.

In some embodiments, determining the mapping relationship between the one or more SSBs corresponding to the one CG period and the one or more PRUs within the one CG period comprises at least one of:
determining the mapping relationship between all SSBs corresponding to the one CG period and PRUs within the one CG period respectively, so as to complete one round of mapping from SSBs to PRUs within the one CG period;
in a case where one or more PRUs unmapped to any SSB remain within the one CG period, and the one or more PRUs unmapped to any SSB are capable of completing another round of mapping from the SSBs to the PRUs, determining the mapping relationship between all the SSBs corresponding to the one CG period and the one or more PRUs unmapped to any SSB within the one CG period respectively, so as to complete another round of mapping from the SSBs to the PRUs within the one CG period; and
in a case where PRUs unmapped to any SSB are absent from the one CG period, and/or one or more PRUs unmapped to any SSB remain within the one CG period but the one or more PRUs unmapped to any SSB are incapable of completing another round of mapping from the SSBs to the PRUs, terminating the mapping.

In some embodiments, the first configuration and/or the second configuration enable M rounds of mapping to be performed from all SSBs corresponding to the one CG period to PRUs within the one CG period, where M is a positive integer.

In some embodiments, the first configuration and/or the second configuration enable M rounds of mapping to be performed from all SSBs corresponding to the one CG period to PRUs within the one CG period, where M is a positive integer, and no unmapped PRUs remain.

In some embodiments, the one CG period comprises a plurality of POs, the plurality of POs are configured with repetitive transmissions respectively, and the repetitive transmissions corresponding to the plurality of POs are performed sequentially or alternately.

In some embodiments, the first device is a terminal or a network device.

In some embodiments, the first device is a terminal, and determining the second configuration comprises:
receiving the second configuration sent by a network device via an RRC release message and/or via an SIB1 message.

In some embodiments, the first device is a terminal, and the mapping method further comprises:
determining a target PRU, wherein an SSB mapped to the target PRU is associated with a target downlink beam, and the target PRU indicates the target downlink beam; and
transmitting data to a network device by using the target PRU.

For a detailed description of steps 5101 to 5102, reference may be made to the content of the above embodiments.

The mapping method involved in the embodiments of the present disclosure may include at least one of steps S4201 to S4206. For example, step S4201 may be implemented as an independent embodiment, and step S4202 may be implemented as an independent embodiment, which is not limited thereto.

In the present implementation or embodiment, the steps may be implemented independently, combined arbitrarily, or performed in a swapped order without contradiction; optional modes or optional examples may be combined arbitrarily, and may also be combined arbitrarily with any steps of other implementations or embodiments.

FIG. 5B is a schematic flowchart of a mapping method according to an embodiment of the present disclosure. As shown in FIG. 5B, an embodiment of the present disclosure relates to a mapping method applied to a communication system, where the communication system includes a terminal and a network device, and the mapping method includes at least one of the following steps.

At step 5201, a network device determines one or more PRUs corresponding to one or more POs within one CG period.

At step 5202, a network device determining a mapping relationship between one or more SSBs corresponding to the one CG period and the one or more PRUs within the one CG period.

At step 5203, a terminal determines one or more PRUs corresponding to one or more POs within one CG period.

At step 5204, a terminal determines a mapping relationship between one or more SSBs corresponding to the one CG period and the one or more PRUs within the one CG period.

Optional implementations of steps 5201 to 5204 may refer to the descriptions in the foregoing embodiments.

In some embodiments, the above method may include the methods described in the embodiments on the communication system side, the terminal side, the network device side, and the like, which are not repeated herein.

The mapping method involved in the embodiments of the present disclosure may include at least one of steps S5101 to S5104. For example, step S5101 may be implemented as an independent embodiment, and step S5102 may be implemented as an independent embodiment, which is not limited thereto.

**In** the present implementation or embodiment, the steps may be implemented independently, combined arbitrarily, or performed in a swapped order without contradiction; optional modes or optional examples may be combined arbitrarily, and may also be combined arbitrarily with any steps of other implementations or embodiments.

The following is an exemplary introduction to the above method.

Optional example 1: For a longer CG-SDT periodicity, the definitions of SSB-to-PRU association period and association pattern period are no longer used; or, for a longer CG-SDT periodicity, the SSB-to-PRU association period is the same as the period of the CG-SDT PUSCH period, and the definition related to association pattern period is no longer used.

Optional example 2: Based on the optional example 1, an SSB-to-PRU mapping is performed for PRU resources on one PUSCH occasion within one CG period according to a SSB-to-PRU mapping ratio configured by the base station.

Optional example 3: Based on the optional example 2, after all SSBs complete one round of mapping, the next round of mapping may be continued until the remaining PRUs are insufficient to complete one round of mapping, and the remaining PRUs are regarded as unavailable resources.

Optional example 4: Alternatively, based on the optional example 2, the terminal does not expect an SSB and PRU configuration from the base station to result in non-integer rounds of SSB-to-PRU mapping.

Optional example 5: Alternatively, based on the optional example 2, the terminal expects the SSB and PRU configuration from the base station to enable exactly one round of SSB-to-PRU mapping to be completed.

Optional example 6: The PRU refers to one DMRS port of one DMRS sequence on one PUSCH occasion.

Optional example 7: The PRU resources are numbered in the order of DMRS ports first and then DMRS sequences.

Optional example 8: All the SSBs are SSB indices configured by the gNB for the corresponding CG-SDT PUSCH via an RRC release message, and the SSB indices may be nonconsecutive.

Optional example 9: In some embodiments, to support scenarios with a large count of SSB indices, for example, up to 64 SSB indices in FR2, multiple POs may be configured for one CG period, supporting one or more of the following configuration modes: frequency-domain multiple PO configuration, time-domain multiple PO configuration.

Optional example 10: Based on the optional example 9, the PRU resources are numbered in the order of DMRS ports first, then DMRS sequences, followed by frequency-domain POs, and finally time-domain POs.

Optional example 11: FIGS. 5C and 5D are resource mapping patterns according to an embodiment of the present disclosure. In some embodiments, for the time-domain multiple PO configuration mode, in the case of CG-SDT repetition, any one of the resource mapping patterns shown in FIGS. 5C and 5D is considered (assuming 2 times of repetition and 2 TDMed POs for SSB index mapping).

Optional example 12: Based on the optional example 9, if the multiple POs are time-domain multiple POs, for a longer CG-SDT periodicity, the definitions of SSB-to-PRU association period and association pattern period are no longer used; or, for a longer CG-SDT periodicity, the definition of SSB-to-PRU association pattern period is no longer used, and the SSB-to-PRU association period is the period of the CG-SDT PUSCH period.

The present disclosure proposes an SSB-to-CG-SDT PUSCH resource mapping manner supporting the longer CG-SDT periodicity, so that reasonable PRU resources are implicitly indicated to the gNB for each SSB index, thereby enabling the gNB to determine an optimal transmission beam for downlink transmission in a subsequent SDT procedure.

The embodiments of the present disclosure further provide an apparatus for implementing any of the methods described above. For example, an apparatus is provided, which includes units or modules configured to implement each step performed by the terminal in any of the methods described above. For another example, another apparatus is provided, which includes units or modules configured to implement each step performed by the network device (e.g., access network device, core network function node, core network device, etc.) in any of the methods described above.

It should be understood that the division of units or modules in the above apparatus is merely a logical function division. In actual implementation, all or part of units or modules may be integrated into a single physical entity, or may be physically separated. In addition, the units or modules in the apparatus may be implemented in the form of a processor invoking software: for example, the apparatus includes a processor connected to a memory, where instructions are stored in the memory, and the processor invokes the instructions stored in the memory to implement any of the above methods or the functions of each unit or module of the above apparatus. The processor may be a general-purpose processor, such as a central processing unit (CPU) or a microprocessor, and the memory may be an internal memory of the apparatus or an external memory of the apparatus. Alternatively, the units or modules in the apparatus may be implemented in the form of hardware circuits, and the functions of some or all units or modules may be implemented through the design of hardware circuits. The above hardware circuits may be understood as one or more processors; for example, in one implementation, the hardware circuits are application-specific integrated circuits (ASICs), and the functions of some or all of the above units or modules are implemented through the design of logical relationships between components in the circuits; for another example, in another implementation, the hardware circuits may be implemented through programmable logic devices (PLDs). Taking field programmable gate arrays (FPGAs) as an example, they may include a large count of logic gate circuits, and the connection relationships between the logic gate circuits are configured through configuration files to implement the functions of some or all of the above units or modules. All units or modules of the above apparatus may be fully implemented in the form of a processor invoking software, fully implemented in the form of hardware circuits, or partially implemented in the form of a processor invoking software and the remaining part implemented in the form of hardware circuits.

In the embodiments of the disclosure, the processor is a circuit with signal processing capability. In one implementation, the processor may be a circuit with instruction reading and running capabilities, such as a CPU, a microprocessor, a graphics processing unit (GPU) (which may be understood as a microprocessor), or a digital signal processor (DSP). In another implementation, the processor may implement certain functions through the logical relationship of hardware circuits, where the logical relationship of the hardware circuits is fixed or reconfigurable. For example, the processor is a hardware circuit implemented by an ASIC or a PLD, such as an FPGA. In a reconfigurable hardware circuit, the process in which the processor loads a configuration file to implement hardware circuit configuration may be understood as the process in which the processor loads instructions to implement the functions of some or all of the above units or modules. In addition, the processor may also be a hardware circuit designed for artificial intelligence, which may be understood as an ASIC, such as a neural network processing unit (NPU), a tensor processing unit (TPU), or a deep learning processing unit (DPU).

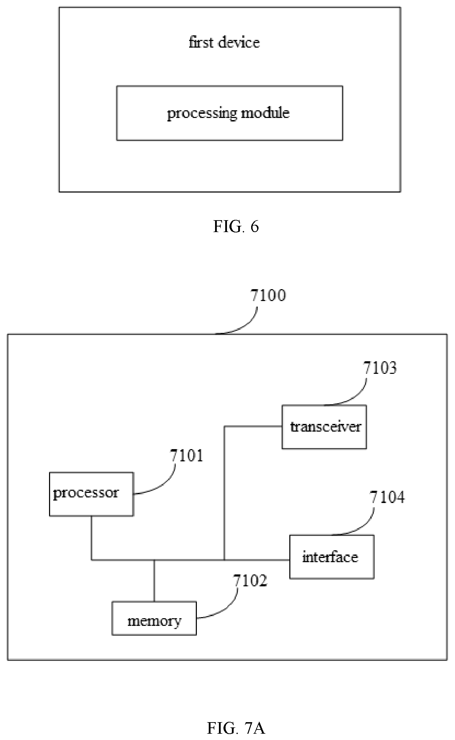

FIG. 6 is a schematic diagram of a network device provided by an embodiment of the present disclosure. As shown in FIG. 6, the network device includes:
a processing module configured to determine one or more PRUs corresponding to one or more POs within one CG period;
the processing module is further configured to determine a mapping relationship between one or more SSBs corresponding to the one CG period and the one or more PRUs within the one CG period.

In some embodiments, the processing module is configured to perform steps related to "processing" performed by the network device 101 and the terminal 102 in any of the foregoing methods. In some embodiments, the network device further includes at least one of a transmitting module and a receiving module. The transmitting module is configured to perform steps related to "transmission" performed by the network device 101 and the terminal 102 in any of the foregoing methods, which are not repeated herein. The receiving module is configured to perform steps related to "reception" performed by the network device 101 and the terminal 102 in any of the foregoing methods, which are not repeated herein.

Fig. 7A is a schematic diagram of a communication device 7100 provided in an embodiment of the disclosure. The communication device 7100 may be a network device (e.g., an access network device, a core network device, etc.), a terminal (e.g., a user equipment, etc.), a chip, chip system, processor or the like configured to support the network device in implementing any of the above methods, or a chip, chip system, processor or the like configured to support the terminal in implementing any of the above methods. The communication device 7100 may be configured to implement the methods described in the above method embodiments, and for details, reference may be made to the descriptions in the above method embodiments.

**As** shown in Fig. 7A, the communication device 7100 includes one or more processors 7101. The processor 7101 may be a general-purpose processor, a special-purpose processor, or the like, for example, a baseband processor or a CPU. The baseband processor may be configured to process communication protocols and communication data, while the CPU may be configured to control the communication apparatus (e.g., base station, baseband chip, terminal, terminal device chip, DU, CU, etc.), execute programs, and process program data. In some embodiments, the communication device 7100 is configured to implement any of the methods described above. In some embodiments, the one or more processors 7101 are configured to invoke instructions to cause the communication device 7100 to execute any of the methods described above.

In some embodiments, the communication device 7100 further includes one or more memories 7102 configured to store instructions. In some embodiments, all or part of the memories 7102 may also be located outside the communication device 7100.

In some embodiments, the communication device 7100 further includes one or more transceivers 7103. When the communication device 7100 includes one or more transceivers 7103, communication steps such as transmission and reception in the above method are performed by the transceivers 7103, and other steps are performed by the processor 7101.

In some embodiments, the transceiver may include a receiver and/or a transmitter, which may be separate components or integrated into a single unit. In some embodiments, terms such as transceiver, transceiving unit, transceiver device, transceiving circuit, interface circuit, and interface are interchangeable with each other; terms such as transmitter, transmitting unit, transmitter device, and transmitting circuit are interchangeable with each other; terms such as receiver, receiving unit, receiver device, and receiving circuit are interchangeable with each other.

In some embodiments, the communication device 7100 further includes one or more interface circuits 7104, which are connected to the memories 7102. The one or more interface circuits 7104 may be configured to receive signals from the memories 7102 or other devices, and may be configured to transmit signals to the memories 7102 or other devices. For example, the one or more interface circuits 7104 may read instructions stored in the memories 7102 and transmit the instructions to the processor 7101.

The communication device 7100 described in the above embodiments may be a network device or a terminal, but the scope of the communication device 7100 described in the disclosure is not limited thereto, and the structure of the communication device 7100 may not be restricted by that shown in Fig. 7A. The communication device may be an independent device or part of a larger device. For example, the communication device may be: 1) an independent integrated circuit (IC), a chip, or a chip system or subsystem; (2) a collection of one or more ICs, in some embodiments, the above IC collection may also include a storage component for storing data and programs; (3) an ASIC, such as a modem; (4) a module embeddable in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others.

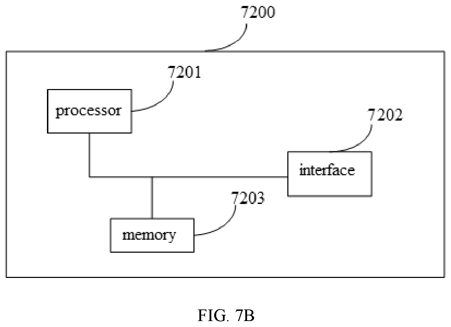

FIG. 7B is a schematic diagram of a chip 7200 according to an embodiment of the present disclosure. In cases where the communication device 7100 may be a chip or a chip system, reference may be made to the schematic diagram of the chip 7200 shown in FIG. 7B, but it is not limited thereto.

The chip 7200 includes one or more processors 7201, and the one or more processors 7201 are configured to invoke instructions to cause the chip 7200 to perform any of the foregoing methods.

In some embodiments, the chip 7200 further includes one or more interface circuits 7202, which are connected to the memories 7203. The one or more interface circuits 7202 may be configured to receive signals from the memories 7203 or other devices, and may be configured to transmit signals to the memories 7203 or other devices. For example, the one or more interface circuits 7202 may read instructions stored in the memories 7203 and transmit the instructions to the processors 7201. In some embodiments, terms such as interface circuit, interface, transmit-receive pin, and transceiver may be interchanged with each other.

In some embodiments, the chip 7200 further includes one or more memories 7203 configured to store instructions. In some embodiments, all or part of the memories 7203 may be located outside the chip 7200.

The present disclosure further provides a storage medium having instructions stored thereon, which, when run on the communication device 7100, cause the communication device 7100 to perform any of the foregoing methods. In some embodiments, the storage medium is an electronic storage medium. In some embodiments, the storage medium is a computer-readable storage medium, but is not limited thereto, and it may also be a storage medium readable by other devices. In some embodiments, the storage medium may be a non-transitory storage medium, but is not limited thereto, and it may also be a transitory storage medium.

The present disclosure further provides a program product which, when executed by the communication device 7100, causes the communication device 7100 to perform any of the foregoing methods. In some embodiments, the program product is a computer program product.

The present disclosure further provides a computer program which, when run on a computer, causes the computer to perform any of the foregoing methods.

In the aforementioned embodiments, implementation may be accomplished in whole or in part by software, hardware, firmware, or any combination thereof. When implemented by software, the implementation may be in the form of a computer program product in whole or in part. The computer program product includes one or more computer programs. When the computer programs are loaded and executed on a computer, the processes or functions described in the embodiments of the present disclosure are generated in whole or in part. The computer may be a general-purpose computer, a special-purpose computer, a computer network, or another programmable device. The computer programs may be stored in a computer-readable storage medium or transmitted from one computer-readable storage medium to another. For example, the computer programs may be transmitted from a website, computer, server, or data center to another website, computer, server, or data center via a wired (e.g., coaxial cable, optical fiber, digital subscriber line (DSL)) or wireless (e.g., infrared, wireless, microwave, etc.) means. The computer-readable storage medium may be any available medium that can be accessed by a computer, or a data storage device such as a server or data center integrating one or more available media. The available media may be magnetic media (e.g., floppy disks, hard disks, magnetic tapes), optical media (e.g., high-density digital video discs (DVDs)), or semiconductor media (e.g., solid state disks (SSDs)), etc.

Those of ordinary skill in the art will appreciate that the units and algorithmic steps of the examples described in conjunction with the embodiments disclosed herein can be implemented by electronic hardware, or a combination of computer software and electronic hardware. Whether such functions are executed in hardware or software depends on the specific application and design constraints of the technical solution. Skilled artisans may implement the described functions using different methods for each specific application, but such implementations shall not be deemed to be beyond the scope of the present disclosure.

Persons skilled in the art can clearly understand that, for the convenience and conciseness of description, the specific working processes of the systems, devices, and units described above may refer to the corresponding processes in the above method embodiments, and details are not repeated herein.

The above is merely specific implementations of the present disclosure, but the protection scope of the present disclosure is not limited thereto. Any person skilled in the art who is familiar with the technical field can easily conceive of changes or substitutions within the technical scope disclosed by the present disclosure, which shall all fall within the protection scope of the present disclosure. Therefore, the protection scope of the present disclosure shall be subject to the protection scope defined by the claims.

## Claims

1. A mapping method, comprising:
determining, by a first device, one or more physical uplink shared channel (PUSCH) resource units (PRUs) corresponding to one or more PUSCH occasions (POs) within one configured grant (CG) period; and
determining, by the first device, a mapping relationship between one or more synchronization signal blocks (SSBs) corresponding to the one CG period and the one or more PRUs within the one CG period.

2. The mapping method according to claim 1, wherein determining the one or more PRUs corresponding to the one or more POs within the one CG period comprises:
determining a first configuration, wherein the first configuration is used to configure at least one of: a count of POs within the one CG period, or a demodulation reference signal (DMRS) configuration corresponding to a PO, wherein the DMRS configuration comprises at least one of: a DMRS mapping type, a DMRS port or a DMRS scrambling identifier (ID), and different DMRS scrambling IDs are used to generate different DMRS sequences; and
determining the one or more PRUs corresponding to the one or more POs within the one CG period based on the first configuration, and numbering the one or more PRUs sequentially, wherein a resource occupied by the DMRS port corresponding to a DMRS sequence on the PO corresponds to one PRU respectively.

3. The mapping method according to claim 2, wherein the DMRS mapping type comprises DMRS type 1 and/or DMRS type 2; and
the first configuration is capable of configuring N DMRS scrambling IDs, where N is a positive integer and N≤4.

4. The mapping method according to claim 2, wherein numbering the one or more PRUs sequentially comprises:
in response to the one CG period comprising one PO, numbering the one or more PRUs sequentially in a first manner; and
in response to the one CG period comprising a plurality of POs, numbering the one or more PRUs sequentially in a second manner.

5. The mapping method according to claim 4, wherein the first manner comprises:
numbering one or more PRUs respectively corresponding to one or more DMRS ports corresponding to a first DMRS sequence sequentially, and numbering one or more PRUs respectively corresponding to one or more DMRS ports of a second DMRS sequence sequentially, until PRUs respectively corresponding to DMRS ports corresponding to all DMRS sequences are numbered.

6. The mapping method according to claim 4, wherein PO time domain positions and/or PO frequency domain positions of the plurality of POs within the one CG period are different, wherein a PO time domain position refers to a time domain position where the PO is located, and a PO frequency domain position refers to a frequency domain position where the PO is located.

7. The mapping method according to claim 4 or 6, wherein the second manner comprises:
numbering PRUs respectively corresponding to DMRS ports corresponding to all DMRS sequences of POs at all PO frequency domain positions on a first PO time domain position within the one CG period sequentially in a predetermined manner, and numbering PRUs respectively corresponding to DMRS ports corresponding to all DMRS sequences of POs at all PO frequency domain positions on a second PO time domain position within the one CG period sequentially in the predetermined manner, until PRUs respectively corresponding to DMRS ports corresponding to all DMRS sequences of POs at all PO frequency domain positions on all PO time domain positions within the one CG period are numbered.

8. The mapping method according to claim 7, wherein the predetermined manner comprises:
numbering one or more PRUs respectively corresponding to one or more DMRS ports corresponding to a first DMRS sequence of a PO at a first PO frequency domain position on a PO time domain position sequentially, and numbering one or more PRUs respectively corresponding to one or more DMRS ports corresponding to a second DMRS sequence of the PO at the first PO frequency domain position on the PO time domain position sequentially, so as to determine sequence numbers of PRUs respectively corresponding to DMRS ports corresponding to all DMRS sequences of the PO at the first PO frequency domain position on the PO time domain position;
numbering one or more PRUs respectively corresponding to one or more DMRS ports corresponding to a first DMRS sequence of a PO at a second PO frequency domain position on the PO time domain position sequentially, and numbering one or more PRUs respectively corresponding to one or more DMRS ports corresponding to a second DMRS sequence of the PO at the second PO frequency domain position on the PO time domain position sequentially, so as to determine sequence numbers of PRUs respectively corresponding to DMRS ports corresponding to all DMRS sequences of the PO at the second PO frequency domain position on the PO time domain position,
until PRUs respectively corresponding to DMRS ports corresponding to all DMRS sequences of POs at all PO frequency domain positions on the PO time domain position are numbered.

9. The mapping method according to any one of claims 2 to 8, wherein determining the mapping relationship between the one or more SSBs corresponding to the one CG period and the one or more PRUs within the one CG period comprises:
determining a second configuration, wherein the second configuration is used to configure at least one of: the one or more SSBs corresponding to the one CG period, or a mapping ratio between the one or more SSBs and the one or more PRUs; and
determining, based on the second configuration and sequence numbers of the one or more PRUs, the mapping relationship between the one or more SSBs corresponding to the one CG period and the one or more PRUs within the one CG period.

10. The mapping method according to any one of claims 1 to 9, wherein determining the mapping relationship between the one or more SSBs corresponding to the one CG period and the one or more PRUs within the one CG period comprises at least one of:
determining the mapping relationship between all SSBs corresponding to the one CG period and PRUs within the one CG period respectively, so as to complete one round of mapping from SSBs to PRUs within the one CG period;
in a case where one or more PRUs unmapped to any SSB remain within the one CG period, and the one or more PRUs unmapped to any SSB are capable of completing another round of mapping from the SSBs to the PRUs, determining the mapping relationship between all the SSBs corresponding to the one CG period and the one or more PRUs unmapped to any SSB within the one CG period respectively, so as to complete another round of mapping from the SSBs to the PRUs within the one CG period; and
in a case where PRUs unmapped to any SSB are absent from the one CG period, and/or one or more PRUs unmapped to any SSB remain within the one CG period but the one or more PRUs unmapped to any SSB are incapable of completing another round of mapping from the SSBs to the PRUs, terminating the mapping.

11. The mapping method according to claim 9 or 10, wherein the first configuration and/or the second configuration enable M rounds of mapping to be performed from all SSBs corresponding to the one CG period to PRUs within the one CG period, where M is a positive integer.

12. The mapping method according to any one of claims 1 to 11, wherein the one CG period comprises a plurality of POs, the plurality of POs are configured with repetitive transmissions respectively, and the repetitive transmissions corresponding to the plurality of POs are performed sequentially or alternately.

13. The mapping method according to any one of claims 1 to 12, wherein the first device is a terminal or a network device.

14. The mapping method according to claim 9, wherein the first device is a terminal, and determining the second configuration comprises:
receiving the second configuration sent by a network device via a radio resource control (RRC) release message and/or via a system information block 1 (SIB1) message.

15. The mapping method according to any one of claims 1 to 14, wherein the first device is a terminal, and the mapping method further comprises:
determining a target PRU, wherein an SSB mapped to the target PRU is associated with a target downlink beam, and the target PRU indicates the target downlink beam; and
transmitting data to a network device by using the target PRU.

16. The mapping method according to any one of claims 1 to 15, wherein the one CG period is used for a small data transmission (SDT).

17. A mapping method, applied in a communication system comprising a network device and a terminal, comprising at least one of:
a network device determining one or more physical uplink shared channel (PUSCH) resource units (PRUs) corresponding to one or more PUSCH occasions (POs) within one configured grant (CG) period;
a network device determining a mapping relationship between one or more synchronization signal blocks (SSBs) corresponding to the one CG period and the one or more PRUs within the one CG period;
a terminal determining one or more PRUs corresponding to one or more POs within one CG period; or
a terminal determining a mapping relationship between one or more SSBs corresponding to the one CG period and the one or more PRUs within the one CG period.

18. A first device, comprising:
a processing module configured to determine one or more physical uplink shared channel (PUSCH) resource units (PRUs) corresponding to one or more PUSCH occasions (POs) within one configured grant (CG) period;
the processing module is further configured to determine a mapping relationship between one or more synchronization signal blocks (SSBs) corresponding to the one CG period and the one or more PRUs within the one CG period.

19. A communication device, comprising:
one or more processors;
wherein the one or more processors are configured to invoke instructions to cause the communication device to execute the mapping method according to any one of claims 1 to 16.

20. A communication system, comprising a terminal and a network device, wherein the terminal or the network device is configured to implement the mapping method according to any one of claims 1 to 16.

21. A storage medium storing instructions, wherein when the instructions are run on a communication device, the communication device is caused to execute the mapping method according to any one of claims 1 to 16.
